# EUROPEAN PATENT APPLICATION

(11) **EP 2 249 306 A1**
(43) Date of publication of application: **10.11.2010**
(21) Application number: 09708769.6
(22) Date of filing: 04.02.2009
(51) Int. Cl.: G06Q 50/00, E06B 7/28

(54) **COMMUNICATION DEVICE, COMMUNICATION METHOD AND PROGRAM**

(30) Priority: 04.02.2008 JP 2008024092
(71) Applicant: Sony Corporation, Tokyo 108-0075 (JP)
(72) Inventor: KONDO, Tetsujiro, Tokyo 108-0075 (JP)
(74) Representative: Beder, Jens
(86) International application number: PCT/JP2009/051837
(87) International publication number: WO 2009/099081

(57) **Abstract**

The present invention relates to a communication device, communication method, and program that realizes a collaboration wherein multiple facilities nearby having similar objectives work together, enabling prosperity of an entire community.

Two facilities i1 and i2 and a control center exist in the community, wherein a communication device 11 is installed in the facility i1, a communication device 12 in the facility i2, and a control device 13 in the control center, respectively. The communication devices 11 and 12 have sensor means to sense and output a physical amount such as light. For example, the communication device 11 senses the physical amount by the sensor means thereof, and outputs for sending to another communication device 12. Also, the communication device 11 instructs the sensor output of the sensor means that the other communication device 12 has, transmits the instruction information corresponding to the instruction thereof, and receives the sensor output of the sensor means instructed according to the instruction information thereof. The present invention can be applied to a communication device that performs communication for the purpose of collaboration.

## Description

### Technical Field

The present invention relates to a communication device, communication method, and program, and particularly relates to a communication device, communication method, and program, enabling prosperity in the entire city.

### Background Art

Communities are formed where people with similar objectives live within an area close to one another, such as those called medical malls, security towns, and care villages, for example.

For example, in a medical mall, multiple medical facilities, i.e. medical facilities of various specialties such as an ophthalmologist, internist, orthopedic, and so forth are provided, and the people living in a community serving as a medical mall can receive treatment from various types of specialties in the community serving as a medical mall, even without traveling to another community.

Examples of communities wherein facilities exist that provide similar services, such as medical malls or the like, include such as so-called resort area, hot springs districts, and so forth.

In a resort area or hot springs district, as multiple facilities that provide similar services, for example, multiple hotels or the like are built in a row, and service provision is performed such as the provision of food and beverage, provision of lodging facilities, and the like.

Now, for example, each of the multiple hotels in a hot springs district is in a state of competition with other hotels, whereby effort is made individually to attract customers.

In order to attract customers, features that are so-called strong points, such as the hotel getting good sunlight, the views from the hotel being good, and so forth, are extremely effective.

Now, in order to improve sunlight at the hotel, a technique can be used to perform daylighting as described in Patent Document 1, for example. Also, regarding views, a technique can be used to selectively display images photographed by multiple cameras from a distance, and show customers (users) the various images as views, as described in Patent Document 2, for example.

Patent Document 1 Japanese Unexamined Patent Application Publication No. 2001-305473
Patent Document 2 Japanese Unexamined Patent Application Publication No. 2007-108677

### Disclosure of Invention

### Technical Problem

Now, even a hotel having a good view may require new efforts to attract customers if a high-rise hotel is newly built in the direction of the good view and the feature of a good view is lost.

Also, for example, in a hot springs district, if there is a feature prominent to a small number of hotels, but lack in many other hotels, the attractiveness of the overall hot springs district is reduced, and consequently customer attraction to the featured hotels is also reduced.

Accordingly, for the prosperity of the entire hot springs district, the customer attractiveness to each hotel in the hot springs district needs to be improved.

However, for each hotel to use the techniques and so forth described in the Patent Documents 1 or 2 to individually attempt attracting customers is not efficient.

Note that the Patent Documents 1 and 2 do not describe or suggest realizing a business wherein multiple facilities collaborate.

The present invention has been made with consideration in light of the above state, and can realize a cooperation wherein multiple facilities in proximity having similar objectives collaborate with one another, thereby enabling prosperity of the entire community.

### Technical Solution

A communication device according to an aspect of the present invention is a communication device having sensor means to sense a physical amount and output the physical amount for sending to another communication device; instructing means to instruct the sensor output of the sensor means that the other communication device has; transmission means to transmit the instruction information corresponding to the instructions of the instructing means; and receiving means to receive the sensor output of the sensor means instructed according to the instruction information.

A communication method according to an aspect of the present invention includes the steps of: sensing the physical amount and outputting to send the physical amount to another communication device; instructing the sensor output of the sensor means which the other communication device has; and receiving the sensor output of the sensor means instructing according to the instruction information; and wherein the communication device has sensing means to sense a physical amount and output for sending the physical amount to another communication device.

A program according to an aspect of the present invention is a program to cause a computer to function as instructing means to instruct the sensor output of the sensor means which the other communication device has; transmission means to transmit the instruction information corresponding to the instruction of the instruction means; and receiving means to receive the sensor output of the sensor means instructed according to the instruction information, wherein the communication device has sensing means to sense a physical amount and output for sending the physical amount to another communication device;

According to an aspect of the present invention, with sensing means to sense a physical amount and output the physical amount for sending to another communication device, the physical amount is sensed and the physical amount is output for sending to the other communication device. On the other hand, instructions are given for sensor output of the sensor means which the other communication device has, and instruction information corresponding to the instructions are transmitted. Subsequently, sensor output of the sensor means instructed according to the instructions is received.

Note that the communication device may be an independent device, or may be an internal block making up one device.

Also, programs can be provided by transferring via a transfer medium or by recording on a recording medium. Advantageous Effects

According to an aspect of the present invention, a collaboration can be realized wherein multiple facilities that are nearby and have similar objectives work together, thereby enabling prosperity for the entire community.

Brief Description of Drawings
Fig. 1 is a diagram showing an example of a community wherein a collaborative processing system is set for realizing collaboration for multiple facilities to work together, to which the present invention is applied.
Fig. 2 is a block diagram showing a configuration example of a collaborative processing system set in the community in Fig. 1.
Fig. 3 is a flowchart describing the processing of a communication device 11.
Fig. 4 is a diagram showing an example of another community wherein a collaborative processing system is set.
Fig. 5 is a diagram schematically showing a configuration example of a guest room HA1 of hotel HA.
Fig. 6 is a diagram showing a configuration example of a liquid crystal display device used as a display unit 115.
Fig. 7 is a diagram showing a first through fourth state of the liquid crystal display device.
Fig. 8 is a block diagram showing a first configuration example of a collaborative processing system applied to the community in Fig. 4.
Fig. 9 is a flowchart describing the processing of a communication device 101.
Fig. 10 is a flowchart describing the processing of a control device 103.
Fig. 11 is a block diagram showing a second configuration example of collaborative processing system set applied to the community in Fig. 4.
Fig. 12 is a flowchart to describe the processing of the communication device 101.
Fig. 13 is a flowchart describing the processing of the control device 103.
Fig. 14 is a block diagram showing a third configuration example of collaborative processing system set applied to the community in Fig. 4.
Fig. 15 is a block diagram showing a fourth configuration example of collaborative processing system set applied to the community in Fig. 4.
Fig. 16 is a cross-sectional diagram showing a configuration example of a guest room HA1 wherein a communication device 301 is set.
Fig. 17 is a diagram showing a configuration example of a sunlight collecting device used as a light collecting unit 311.
Fig. 18 is a diagram showing a detailed configuration example of a sunlight daylighting device 380.
Fig. 19 is a cross-sectional diagram showing a configuration example of the daylighting unit 345.
Fig. 20 is a diagram showing another configuration example of the daylighting unit 345.
Fig. 21 is a diagram distributing an operational mode of a light distributing unit 332.
Fig. 22 is a flowchart describing the processing of the collaborative processing system.
Fig. 23 is a block diagram showing a fifth configuration example of the collaborative processing system applied to the community in Fig. 4.
Fig. 24 is a diagram describing the processing of the collaborative processing system.
Fig. 25 is a flowchart describing the processing of the collaborative processing system.
Fig. 26 is a flowchart describing the processing of the collaborative processing system.
Fig. 27 is a diagram schematically showing a configuration example of a guest room HA1 wherein a communication device 401 is set.
Fig. 28 is a block diagram showing a configuration example according to an embodiment of a computer to which the present invention is applied.

### Explanation of Reference Numerals

11, 12 communication device, 13 control device, 31 sensor unit, 32 instructing unit, 33 transmission unit, 34 receiving unit, 41 sensor unit, 42 instructing unit, 43 transmission unit, 44 receiving unit, 51 control unit, 52, 53 sending unit, 101, 102 communication device, 103 control device, 111 imaging unit, 112 instructing unit, 113 transmission unit, 114 reception unit, 115 display unit, 116 switching unit, 121 imaging unit, 122 instructing unit, 123 transmission unit, 124 reception unit, 125 display unit, 126 switching unit, 131 control unit, 132, 133 sending unit, 134 storage unit, 151, 152 liquid crystal cell, 201, 202 communication device, 203 control device, 211 light collecting unit, 212 instructing unit, 213 transmission unit, 214 light receiving unit, 221 light collecting unit, 222 instructing unit, 223 transmission unit, 224 light receiving unit, 231 control unit, 232, 233 light distributing unit, 301, 302 communication device, 303 control device, 311 light collecting unit, 312 instructing unit, 313 transmission unit, 314 light collecting unit, 315 display unit, 316 electric storage unit, 317 light amount detecting unit, 321 light collecting unit, 322 instructing unit, 323 transmission unit, 324 light collecting unit, 331 control unit, 332, 333 light distributing unit, 341 solar panel, 342L, 342R reflective plate, 343, 344 optical fiber, 345 light collecting unit, 346 light output panel, 351 backlighting unit, 361, 362 lens, 363, 364 prism, 371₁ through 371_{N} lens, 372 lens holder, 373 reflective plate, 374 motor, 375₁, 375₂ gear, 376 horizontal shaft, 377 lens holder supporting member, 378 rotating base, 379 fixed base, 379a rail, 380 sunlight daylighting device, 381 motor, 382 roller, 383 sensor, 401, 402 communication device, 403 control device, 411 light collecting unit, 412 imaging unit, 413 light distributing unit, 414 sending unit, 415 instructing unit, 416 transmission unit, 417 light receiving unit, 418 reception unit, 419 display unit, 421 light collecting unit, 422 imaging unit, 423 light distributing unit, 424 sending unit, 425 instructing unit, 426 transmission unit, 427 light receiving unit, 428 reception unit, 429 display unit, 431 control unit, 432 storage unit, 501 bus, 502 CPU, 503 ROM, 504 RAM, 505 hard disk, 506 output unit, 507 input unit, 508 communication unit, 509 drive, 510 input/output interface, 511 removable recording medium

### Best Mode for Carrying Out the Invention

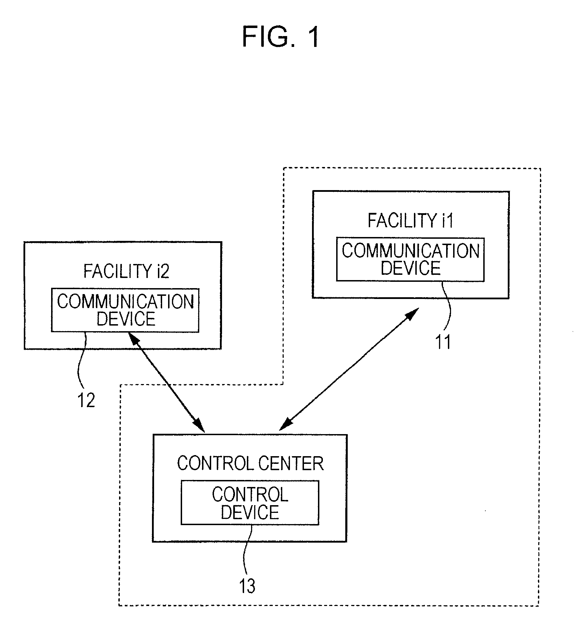

Fig. 1 shows a configuration example of an embodiment of a collaborative processing system in order to realize collaboration for multiple facilities to work together, to which the present invention is applied.

In Fig. 1, the collaborative processing system is made up of multiple, for example, two, communication devices 11 and 12, and a control device 13.

The collaborative processing system is installed in a community where multiple facilities exist that have similar objectives, such as a hot springs district or a community with a collection of casino facilities or the like, for example. Note that a community where a collaborative processing system is installed may be a community such as a hot springs district or the like of which the visitors there do not reside permanently, or a community such as a medical mall of which a purpose is permanent residency.

In fig. 1, the community has two facilities i1 and i2 having similar objectives (provide similar services) and a control center existing, and a communication device 11 is installed in facility i1, a communication device 12 in facility i2, and a control device 13 in the control center, respectively.

The communication device 11 of facility i1 and the communication device 12 of facility i2 perform communication for the collaboration between the control device 13 of the control center, and performs processing according to the control or the like of the control device 13.

Note that the control device 13 may be installed in facility i1 or i2 as integrated with the communication device 11 or 12 instead of the control center. In this case, the facility i1 or i2 wherein the control device 13 is installed functions also as the control center.

Also, the functions of the control device 13 can be divided and handled by the communication devices 11 and 12, and in this case, the facilities i1 and i2 function also as control centers.

Further, in Fig. 1 (similar in later-described diagrams also), the collaborative processing system has two communication devices 11 and 12, but the collaborative processing system can provide three or more communication devices.

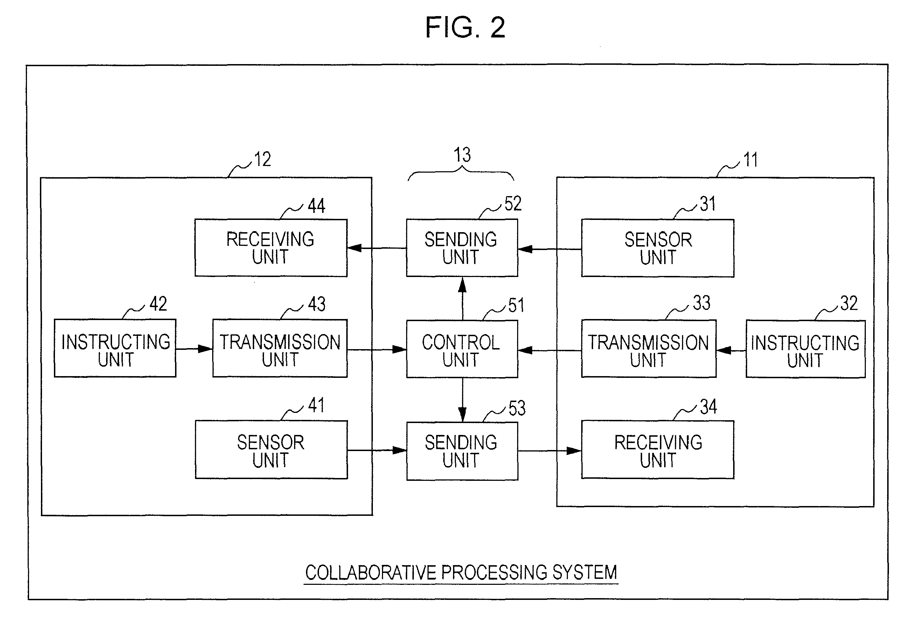

Fig. 2 shows a configuration example of a collaborative processing system installed in the community in Fig. 1 (a community that collaborates).

The communication device 11 is made up of a sensor unit 31, instructing unit 32, transmission unit 33, and receiving unit 34.

The sensor unit 31 senses a physical amount such as light, for example, and outputs such physical amount in order to send to another communication device 12 or the like. Note that the output of the sensor unit 31 (sensor output) is supplied to the sending unit 52.

The instructing unit 32 instructs the sensor output and so forth of the sensor unit 41 which the other communication device 12 has, for example, in accordance with the user operations or the like. That is to say, the instructing unit 32 generates instruction information corresponding to the instructions of the sensor output or the like of the sensor unit 41 which the other communication device 12 has, and supplies to the transmission unit 33, for example, in accordance with the user operations or the like.

The transmission unit 33 transmits the instruction information from the instructing unit 32 to the control unit 51.

The receiving unit 34 receives the sensor output instructed according to the instruction information transmitted to the control unit 51, for example from the sending unit 53.

The communication device 12 is made up similar to the communication device 11.

That is to say, the communication device 12 is made up of a sensor unit 41, instructing unit 42, transmission unit 43, and receiving unit 44, similar respectively to the sensor unit 31, instructing unit 32, transmission unit 33, and receiving unit 44.

Note that with the communication device 12, the sensor output of the sensor unit 41 is supplied to the sending unit 53. Also, in the case that the sensor output instructed according to the instruction information transmitted to the control unit 51 is the sensor output of the sensor unit 31, for example, the receiving unit 44 receives the sensor output from the sending unit 52.

The control device 13 is made up of a control unit 51 and sending units 52 and 53.

The control unit 51 controls the provision of the sensor output by the sending units 52 and 53, according to the instruction information transmitted from the transmission unit 33 of the communication device 11, the instruction information transmitted from the transmission unit 43 of the communication device 12, and the instruction information transmitted from the transmission unit of another communication device making up the collaborative processing system.

The sending unit 52 provides (sends) the sensor output of the sensor unit 31 of the communication device 11 to other communication devices from the communication device 11 (e.g. communication device 12 or another communication device making up the collaborative processing system), according to the control by the control unit 51.

The sending unit 53 provides (sends) the sensor output of the sensor unit 41 of the communication device 12 to other communication devices from the communication device 12 (e.g. communication device 11 or another communication device making up the collaborative processing system), according to the control by the control unit 51.

Note that the sending unit 52 which provides the sensor output of the sensor unit 31 of the communication device 11 to another communication device can be provided in the communication device 11 instead of the control device 13.

Similarly, the sending unit 53 which provides the sensor output of the sensor unit 41 of the communication device 12 to another communication device can be provided in the communication device 12 instead of the control device 13.

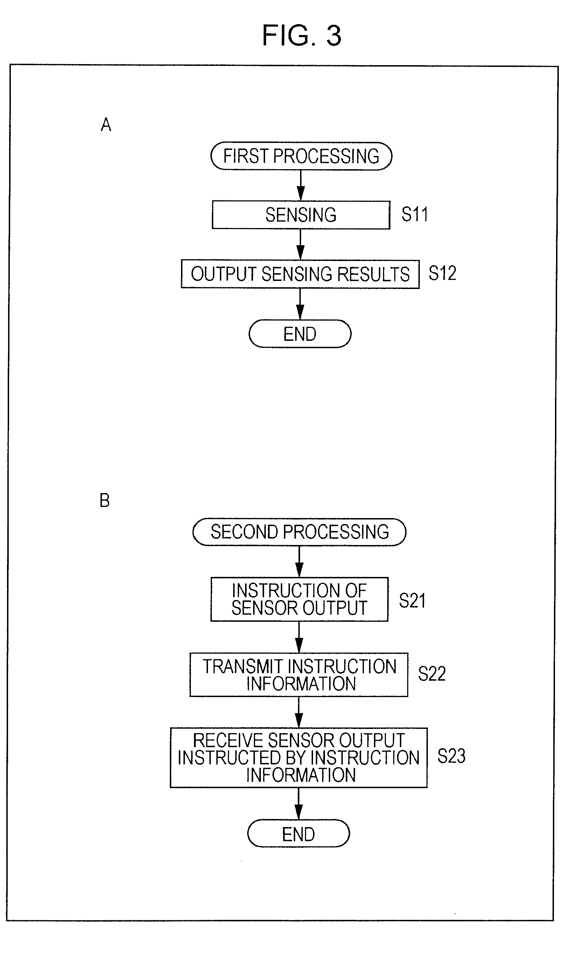

Next, the processing of the communication device 11 in Fig. 2 will be described with reference to Fig. 3.

Note that processing similar to the communication device 11 is performed also in other communication devices making up the collaborative processing system, including the communication device 12.

A first and second processing are performed with the communication device 11.

Fig. 3A is a flowchart describing the first processing.

In the first processing, in step S11 the sensor unit 31 senses a physical amount of light or the like, and the processing advances to step S12. In step S12, the sensor unit 31 outputs the sensing results obtained by sensing the physical amount as sensor output. The sensor output of the sensor unit 31 is supplied to the sending unit 52.

Fig. 3B is a flowchart describing the second processing.

In the second processing, in step S21 the instructing unit 32 instructs sensor output or the like of another communication device, according to the user operations or the like. That is to say, the instructing unit 32 generates instruction information corresponding to the instructions of the sensor output or the like of the sensor unit 41 which the communication device 12, supplies to the transmission unit 33, for example, and the processing advances from step S21 to step S22.

In step S22, the transmission unit 33 transmits the instruction information from the instructing unit 32 to the control unit 51, and the processing advances to step S23.

In step S23, the receiving unit 34 receives the sensor output instructed according to the instruction information transmitted from the transmission unit 33 to the control unit 51.

That is to say, upon the instruction information being transmitted from the transmission unit 33 of the communication device 11, for example, the control unit 51 receives the instruction information thereof and performs control to provide the sensor output to the communication device 11 according to the instruction information thereof.

Specifically, in the case that the sensor output instructed according to the instruction information is sensor output of the sensor unit 41 of the communication device 12, for example, the control unit 51 controls the sending unit 53 which provides the sensor output of the sensor unit 41 of the communication device 12, thereby causing the sending unit 53 to provide the sensor output of the sensor unit 41 to the communication device 11.

In step S23, the receiving unit 34 receives sensor output provided from the sending unit 53 as described above, for example.

Note that the first and second processing are repeatedly performed as appropriate.

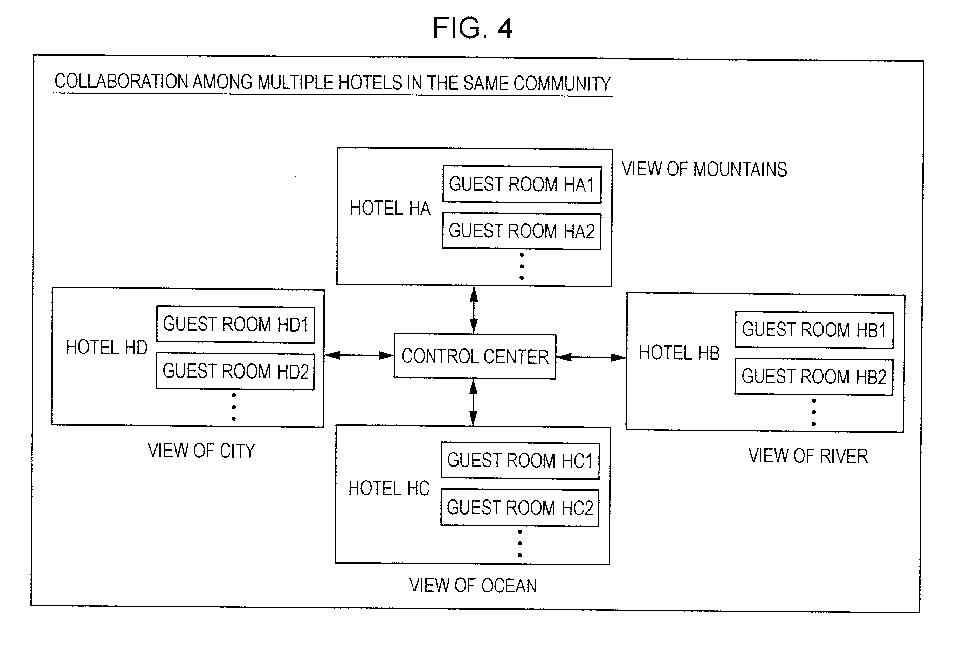

Fig. 4 shows an example of a community wherein the collaborative processing system is installed.

The community in Fig. 4 is a community serving as a resort area, for example, wherein four hotels HA, HB, HC, and HD and a control center are built.

Multiple guest rooms HA1, HA2, ... are provided in the hotel HA. Similarly, multiple guest rooms HB1, HB2, ... in the hotel HB, multiple guest rooms HC1, HC2, ... in the hotel HC, and multiple guest rooms HD1, HD2, ... in the hotel HD, are provided respectively.

Also, (the guest rooms HA1, HA2, ... of) the hotel HA is built in a location enabling viewing of actual mountain scenery, and hotel HB is in a location enabling viewing of actual river scenery. Further, hotel HC is built in a location enabling viewing of actual ocean scenery, and hotel HD is in a location enabling viewing of actual community scenery.

However, the site of the hotel HA is on a site where the actual scenery that can be viewed from other hotels, i.e. the actual river scenery that can be viewed from hotel HB, the actual ocean scenery that can be viewed from hotel HC, and the actual community scenery that can be viewed from hotel HD, cannot be seen.

Similarly, the site of the hotel HB also is on a site where the actual mountain scenery that can be viewed from hotel HA, the actual ocean scenery that can be viewed from hotel HC, and the actual community scenery that can be viewed from hotel HD, cannot be seen.

Further, similarly, the site of the hotel HC also is on a site where the actual mountain scenery that can be viewed from hotel HA, the actual river scenery that can be viewed from hotel HB, and the actual community scenery that can be viewed from hotel HD, cannot be seen, and the site of the hotel HD also is on a site where the actual mountain scenery that can be viewed from hotel HA, the actual river scenery that can be viewed from hotel HB, and the actual ocean scenery that can be viewed from hotel HC, cannot be seen.

However, according to the collaborative processing system installed in the community, with the collaborative processing, the mountain scenery that might have been seen if lodging at hotel HA, the river scenery that might have been seen if lodging at hotel HB, the ocean scenery that might have been seen if lodging at hotel HC, and the community scenery that might have been seen if lodging at hotel HD, can each be seen in any of (the guest rooms of) the hotels HA through HD.

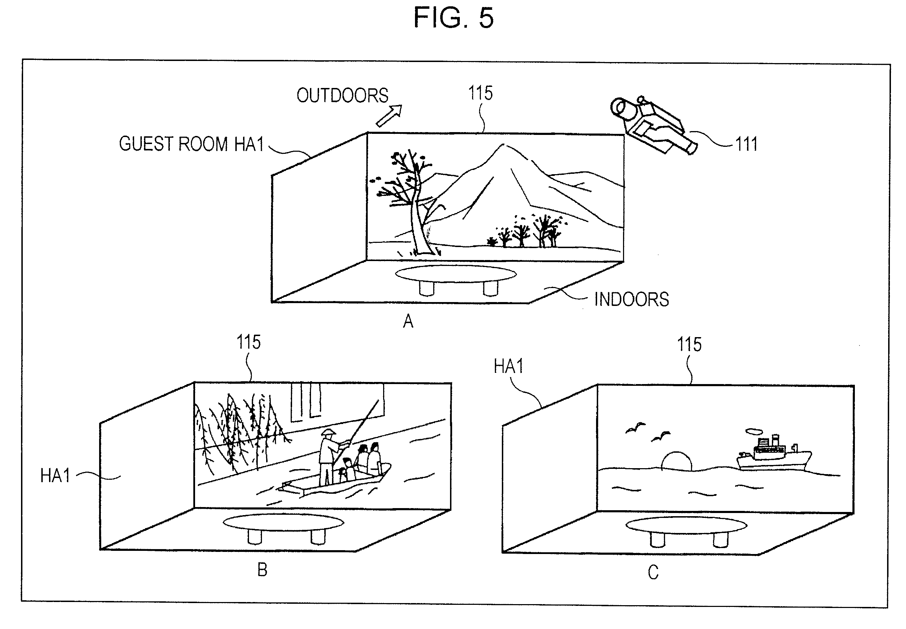

Fig. 5 schematically shows a configuration example of the guest room HA1 of the hotel HA.

In the guest room HA1, a wall face which is a side that can view the actual mountain scenery, for example, of the wall faces thereof, is the display unit 115.

The entire wall face may be the display unit 115, or a portion of the wall face may be the display unit 115. In the case that a portion of the wall face is the display unit 115, for example the portion that would traditionally be the window can be the display unit 115.

Also, in guest room HA1, the wall face serving as the display unit 115 can be not only one wall face where the actual mountain scenery can be viewed, but other wall faces can also be display units, similar to the display unit 115.

Now, in order to simplify the description, we will say that hereafter, only the wall face of the guest room HA1 on the side that the actual mountain scenery can be viewed is the display unit 115, and the wall serving as the display unit 115 thereof will also called a display wall.

The display unit 115 is installed such that an image is displayed, and the display face for displaying the image thereof is on the room interior side of the guest room HA1.

Also, the display unit 115 can display an image, as well as become transparent.

Accordingly, the operation modes of the display unit 115 are a mode to display an image and a mode to be transparent. Hereafter, as appropriate, the mode for the display unit 115 to display an image is called an image display mode, and the mode for the display unit 115 to be transparent is called a window mode.

In window mode, the display unit 115 is transparent, whereby, as shown in A of Fig. 5, the actual mountain scenery can be viewed via the transparent display unit 115. Accordingly, in window mode, the display unit 115 functions as a window.

On the other hand, in image display mode, the display unit 115 displays an image that has been photographed with a camera or the like.

That is to say, an imaging unit 111 such as a camera or the like that images and image and outputs an image signal is installed on the back face of the display unit 115 (display wall).

Now, the back face of the display unit 115 (display wall) is the face on the back side of the front face thereof, in the case that the display face on which the image is displayed is the front face.

Note that in the case that the operating mode of the display unit 115 is in window mode, the imaging unit 111 only has to be installed in a position that the image of the scenery seen from the room interior of the guest room HA1 can be imaged, and accordingly, besides the back face of the display unit 115, for example may be installed at a position near the display unit 115 on the back face side of the display unit 115. Hereafter, as appropriate, the back face of the display unit 115 and a position near the display unit 115 on the back face side of the display unit 115 will be called the roughly back face of the display unit 115.

In image display mode, the display unit 115 can display an image corresponding to an image signal obtained as a result of the imaging unit 111 having performed imaging. Further, with the display unit 115, other images can be displayed.

That is to say, guest rooms other than the guest room HA1, i.e. guest rooms in the hotel HA other than the guest room HA1, and guest rooms in each of the hotels HB through HD which are buildings differing from the hotel HA, are similarly constructed as the guest room HA1, have an imaging unit similar to the imaging unit 111 and a display unit similar to the display unit 115, and the imaging units are installed at the roughly back face of the display units.

Now, at the hotel HA, the imaging unit is installed to face the direction where the actual scenery can be imaged that can be viewed from the hotel HA. This is the same with hotels HB through HD as well.

As described in Fig. 4, the actual scenery that can be viewed from each of the hotels HA through HD differs, whereby the imaging units at the guest rooms of each of the hotels HB through HD are installed facing a direction differing from the direction that the imaging unit 111 of the guest room HA1 of the hotel HA is facing (imaging direction).

With the display unit 115, the images imaged by the imaging unit of the guest rooms at the hotel HA other than the guest room HA1 and by imaging units of the guest rooms at the hotels HB through HD can be displayed according to the operation of the lodging guest (user) of the guest room HA1, for example.

In the case that an image that is photographed with the imaging unit 111 is displayed on the display unit 115, for example, the user can see the mountain scenery similarly as viewing the actual mountain scenery in window mode.

Also, as shown in B of Fig. 5, for example, in the case that an image that is imaged by one of the imaging units of a guest room at the hotel HB is displayed on the display unit 115, the user can see the river scenery that could not have been seen unless lodging at the hotel HB, and can enjoy the sensation as if lodging at the hotel HB.

Further, as shown in C of Fig. 5, for example, in the case that an image that is imaged by one of the imaging units of a guest room at the hotel HC is displayed on the display unit 115, the user can see the ocean scenery that could not have been seen unless lodging at the hotel HC, and can enjoy the sensation as if lodging at the hotel HC.

Further, in the case that an image that is imaged by one of the imaging units of a guest room at the hotel HD is displayed on the display unit 115, the user can see the community scenery that could not have been seen unless lodging at the hotel HD, and can enjoy the sensation as if lodging at the hotel HD.

By realizing a collaboration whereby each of the hotels HA through HD work together to provide images of scenery that can be viewed from each, as described above the user can see any of the scenery that can be viewed from each of the hotels HA through HD, regardless of which of the hotels HA through HD the user lodges at.

Accordingly, for a user that emphasizes the importance of view (scenery) at a hotel for lodging, each of the hotels HA through HD can exercise similar customer attractiveness, thereby enabling prosperity for the entire community.

Note that with the display unit 115, as described above, besides displaying images photographed with the imaging unit of the guest room of the hotels HB through HD which differ from the hotel HA, the images imaged with the imaging units of the guest rooms of the hotel HA other than the guest room HA1 can be displayed.

That is to say, for example with the display unit 115, an image can be displayed that is imaged with the imaging unit of the guest room of a floor differing from the floor of the guest room HA1, i.e. imaged with the imaging unit installed at a position of a differing height from the position that the imaging unit 111 of the guest room HA1 is installed.

Specifically, for example, in the case that the guest room on a floor where the guest room HA1 is lower, the image that is imaged with the imaging unit of the guest room of a higher floor can be displayed. In this case, the user lodging in the guest room HA1 which is on a lower floor can enjoy the sensation as if lodging in the guest room of the uppermost floor.

Additionally, with the display unit 115, images that are imaged with imaging units from guest rooms of the hotel HA other than the guest room HA1 can be displayed.

For example, in the case that the guest room HA1 is not a so-called corner room, an image imaged with the imaging unit of a guest room that is a corner room can be displayed on the display unit 115. In this case, the user lodging in guest room HA1 which is not a corner room can enjoy the sensation as if lodging in a guest room which is a corner room.

Note that in the case of displaying an image on the display unit 115, in order for the user to enjoy the sensation as if viewing the actual scenery, it is desirable for the angle of the image thereof (view angle) to be adjusted to a range (angle) which might have been seen if the display unit 115 had been a window, according to the distance between the user and the display wall face.

Also, the imaging unit 111 can use an omni-directional mirror which uses a hyperboloid mirror.

Further, regarding the installation of the imaging units, besides installing one imaging unit for each guest room, installing multiple imaging units for one guest room, or for example, installing one imaging unit for multiple guest rooms such as two guest rooms that are adjacent (share one imaging unit between multiple guest rooms) can be done.

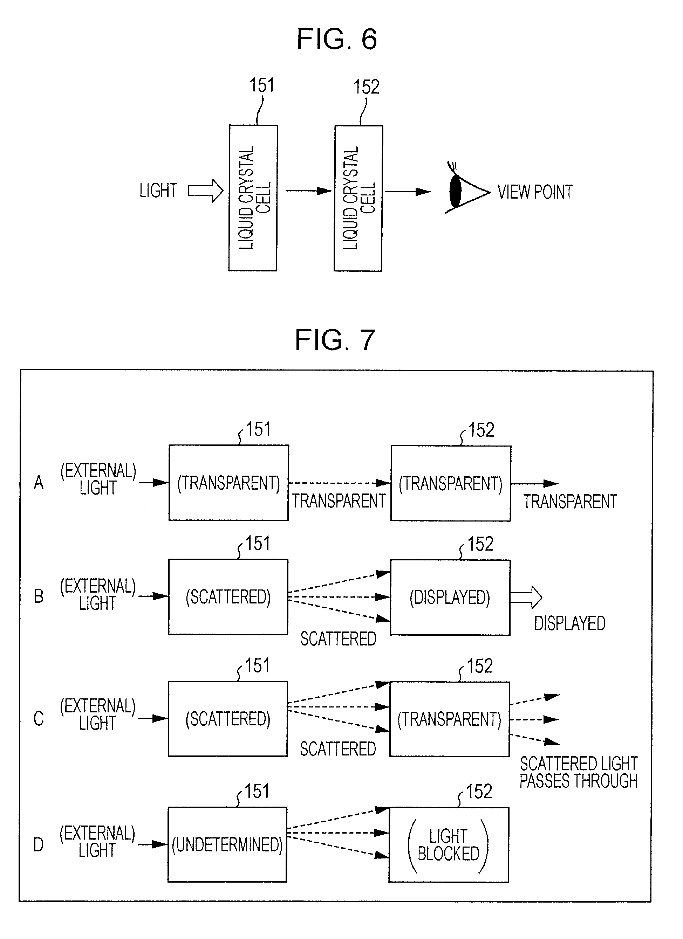

Next, the display unit 115 will be described with reference to Fig. 6 and Fig. 7.

A liquid crystal display device that performs display using liquid crystal as described in Japanese Unexamined Patent Application Publication No. 06-043478, for example, can be used as the display unit 115.

Fig. 6 shows a configuration example of the liquid crystal display device used as the display unit 115.

In Fig. 6, the liquid crystal display device is made up of two liquid crystal cells 151 and 152.

The liquid crystal cell 151, by applying voltage, for example, changes the state between a light dispersion state that disperses light, such as a frosted glass or the like, and a light transmittance state whereby light transmits, such as a transparent glass or the like.

The liquid crystal cell 152, by applying voltage, for example, changes the state between a light transmitting state and a light blocking state that blocks the light.

Note that the liquid crystal cell 152 has the same functions as a liquid crystal cell used for a so-called liquid crystal TV (Television), and accordingly, can control the transmittance (blocking) of light by pixel units.

The liquid crystal display device in Fig. 6 is made up of the liquid crystal cells 151 and 152 that are layered, with the liquid crystal cell 152 side being the display face (front face) that the image is displayed, and the liquid crystal cell 151 side is the back face on the back side thereof.

Accordingly, the liquid crystal display device used as the display unit 115 is disposed so as to face the liquid crystal cell 152 towards the room interior of the guest room HA1, and so as to face the liquid crystal cell 151 toward the room exterior of the guest room HA1 (outside of the hotel HA).

The liquid crystal display device in Fig. 6 has four states of a first, second, third, and fourth.

That is to say, Fig. 7 shows the first through fourth states of the liquid crystal display device in Fig. 6.

In the first state, as shown in A of Fig. 7, the liquid crystal cells 151 and 152 are in a light transmitting state, and the scenery on the liquid crystal cell 151 side can be seen from the liquid crystal cell 152 side.

In the second state, as shown in B of Fig. 7, the liquid crystal cell 151 goes to a light dispersing state, and the liquid crystal cell 152 is in a light transmitting state or light blocking state, by pixel units, according to the image signal.

In this case, light such as the sunlight that is incident in the liquid crystal cell 151 is dispersed by the liquid crystal cell 151 from the room exterior of the guest room HA1, thereby becoming dispersed light, and is used is light to illuminate the liquid crystal cell 151.

Thus, the liquid crystal cell 152 is in a light transmitting state or light blocking state, by pixel units, according to the image signal, thereby displaying an image corresponding to the image signal with the dispersed light from the liquid crystal cell 151 as backlighting.

In the third state, as shown in C of Fig. 7, the liquid crystal cell 151 is in a light dispersion state, and the liquid crystal cell 152 is in the light transmitting state.

In this case, similar to the second state, the dispersed light obtained by the liquid crystal cell 151 transmits the liquid crystal cell 152, and enters the room interior of the guest room HA1. Accordingly, the liquid crystal display device functions as an illuminating device that illuminates the room interior of the guest room HA1.

In the fourth state, as shown in D of Fig. 7, the liquid crystal cell 152 is in a light blocking state, and the liquid crystal display device functions as a curtain, shutter, or the like to block the light from the room exterior.

Note that in the fourth state, the liquid crystal cell 151 may be in either of the light dispersing state or the light transmitting state.

Also, in the third state, by adjusting the number of pixels that allow light to transmit the liquid crystal cell 152, or in the fourth state, by adjusting the number of pixels that block the light with the liquid crystal cell 152, the brightness of the room interior of the guest room HA1 can be adjusted.

The liquid crystal display device used as the display unit 115 is in the first state when in window mode. Also, the liquid crystal display device used as the display unit 115 is in the second state and displays an image when in image display mode.

Note that for the display unit 115, besides the liquid crystal display device in Fig. 6, for example a projector or the like to display an image can be used with the display wall face as a screen.

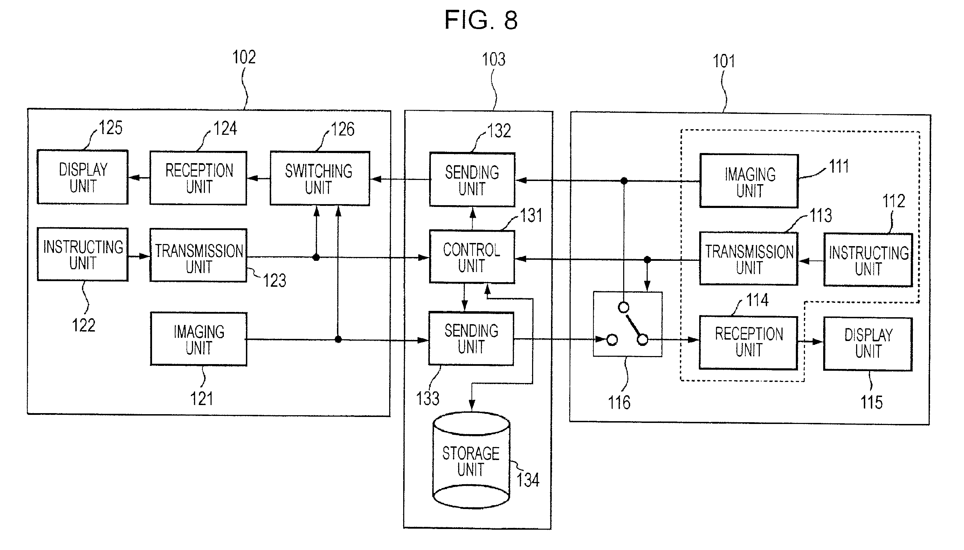

Next, fig. 8 shows a first configuration example of the collaborative processing system applied to the community in Fig. 4.

In fig. 8, the collaborative processing system is made up of multiple communication devices 101 and 102 and a control device 103.

The communication device 101 is installed in the guest room HA1 of the hotel HA, and the communication device 102 is installed in the guest room HB1 in hotel HB (Fig. 4), for example, which is another guest room other than the guest room HA1.

Note that the guest rooms in the hotel HA other than the guest room HA1, the guest rooms in hotel HB other than the guest room HB1, each of the guest rooms in hotel HC and each of the guest rooms in hotel HD also have communication devices installed similar to the communication devices 101 and 102, description which will be omitted.

Also, the control device 103 can be installed in a control center independent from the hotels HA through HD, and for example, may be integrated with the communication devices 101 or 102 in installed in the hotel HA or HB.

Further, the functions of the control device 103 can be divided and handled by the communication devices 101 and 102 as well as other communication devices making up the collaborative processing system.

The communication device 101 is made up of an imaging unit 111, instructing unit 112, transmission unit 113, reception unit 114, display unit 115, and switching unit 116.

The imaging unit 111 acts as the sensor unit 31 in Fig. 2. The imaging unit 111 images an image (senses the light), and outputs an image signal (first image signal). Note that the image signal output by the imaging unit 111 is supplied to the switching unit 116 and sending unit 132.

The instructing unit 112 acts as the instructing unit 32 in Fig. 2. The instructing unit 112 instructs an image signal that the imaging unit of another communication device outputs (second image signal) such as the imaging unit 121 of the communication device 102, according to user operations or the like, for example. That is to say, the instructing unit 112 generates instruction information corresponding to the instruction of the image signal or the like output by the imaging unit of the other communication device according to user operations or the like, and supplies this to the transmission unit 113.

Also, the instructing unit 112 generates instruction information representing necessary instructions and supplies this to the transmission unit 113, in accordance with user operations.

The transmission unit 113 acts as the transmission unit 33 in Fig. 2. The transmission unit 113 transmits the instruction information from the instructing unit 112 to the control unit 131, and supplies this also to the switching unit 116.

The reception unit 114 acts as the receiving unit 34 in Fig. 2. The reception unit 114 receives the image signal output by the imaging unit of other communication devices, i.e. for example, the image signal output by the imaging unit 121 of the communication device 102 and transmitted via the sending unit 133 and switching unit 116, and supplies this to the display unit 115.

Also, the reception unit 114 receives the image signal output by the imaging unit 111 via the switching unit 116, and supplies this to the display unit 115.

The display unit 115 displays an image corresponding to an image signal from the reception unit 114, i.e. an image signal that the imaging unit of another communication device outputs, or an image signal output by the imaging unit 111.

The switching unit 116 selects the image signal output by the imaging unit of the other communication unit or an image signal output by the imaging unit 111, according to the instruction information from the transmission unit 113, and supplies this to the reception unit 114.

That is to say, the image signal output by the imaging unit 111 and the image signal output by an imaging unit of another communication device such as the image signal output by the imaging unit 121 of the communication unit 102, for example, are supplied to the switching unit 116.

Further, instruction information is supplied from the transmission unit 113 to the switching unit 116. The instruction information from the transmission unit 113 expresses instructions of the image signal of the image to be displayed on the display unit 115, and the switching unit 116 selects the image signal output by the imaging unit of the other communication device or the image signal output by the imaging unit 111, according to the instruction information thereof, and supplies this to the reception unit 114.

Note that as to the switching unit 116, the image signal output by the imaging unit 121 of the communication device 102, of the image signals output by imaging units of other communication devices, is transmitted from the sending unit 133.

The communication device 102 is made up similar to the communication device 101.

That is to say, the communication device 102 is made up of an imaging unit 121, instructing unit 122, transmission unit 123, reception unit 124, display unit 125, and switching unit 126 that are similar respectively to the imaging unit 111, instructing unit 112, transmission unit 113, reception unit 114, display unit 115, and switching unit 116.

Note that with the communication device 102, the image signal serving as the sensor output of the imaging unit 121 is supplied to the sending unit 133.

Also, as to the switching unit 126, the image signal output by the imaging unit 111 of the communication device 101, of the image signals output by imaging units of other communication devices, is transmitted from the sending unit 132.

The control device 103 is made up of a control unit 131, sending units 132 and 133, and a storage unit 134.

The control unit 131 acts as the control unit 51 in Fig. 2. The control unit 131 controls the provision of the image signal serving as the sensor output by the sending units 132 and 133, according to the instruction information transmitted from the transmission unit 113 of the communication device 101, the instruction information transmitted from the transmission unit 123 of the communication device 102, and further, information stored in the storage unit 134.

The sending unit 132 acts as the sending unit 52 in Fig. 2. The sending unit 132 provides (sends) the image signal serving as sensor output of the imaging unit 111 of the communication device 101 to other communication devices from the communication device 101 (e.g. communication device 102 or another communication device making up the collaborative processing system), according to the control by the control unit 131.

The sending unit 133 acts as the sending unit 53 in Fig. 2. The sending unit 133 provides the sensor output of the imaging unit 121 of the communication device 102 to other communication devices from the communication device 102 (e.g. communication device 101 or another communication device making up the collaborative processing system), according to the control by the control unit 131.

The storage unit 134 stores information necessary for the control unit 131 to perform processing.

Note that the sending unit 132 which provides the image signal output by the imaging unit 111 of the communication device 101 to another communication device can be provided in the communication device 101 instead of the control device 103.

Similarly, the sending unit 133 which provides the image signal output by the imaging unit 121 of the communication device 102 to another communication device can be provided in the communication device 102 instead of the control device 103.

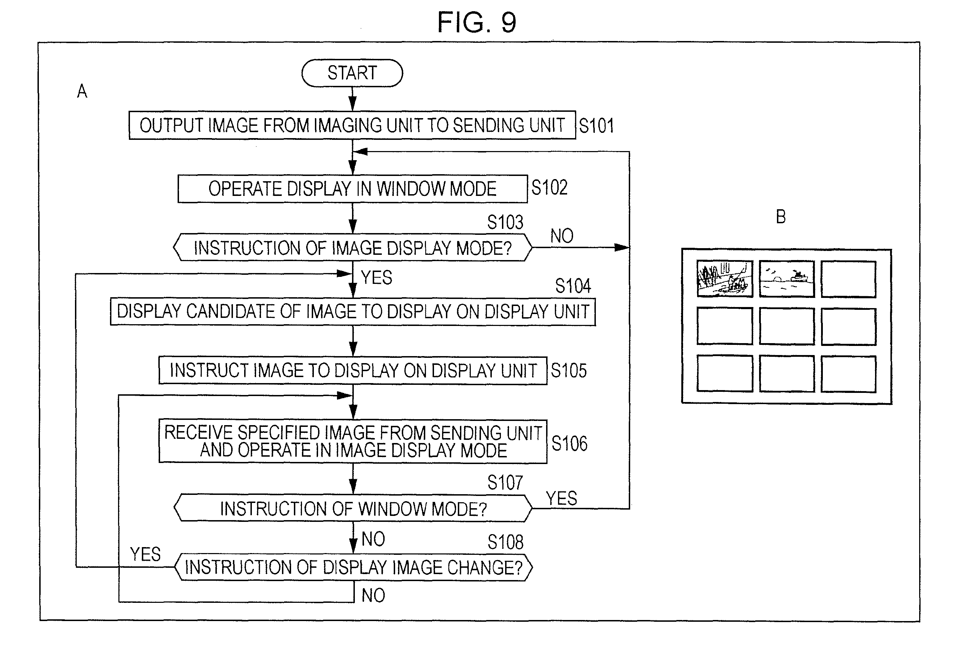

Next, the processing of the communication device 101 in Fig. 8 will be described with reference to Fig. 9.

Note that processing similar to the communication device 101 is performed also in other communication devices making up the collaborative processing system, including the communication device 102.

Fig. 9A is a flowchart describing the processing of the communication device 101 in Fig. 8.

With the communication device 101, in step S101 the imaging unit 111 images an image, starts the image signal to be output to the sending unit 132, and the processing advances to step S102.

Now, the sending unit 132 receives the image signal from the imaging unit 111, and temporarily stores this in an internal memory (not shown), as needed. Further, the sending unit 132 sends the image signal from the imaging unit 111 (including the image signal stored in the internal memory) to another communication device such as the communication device 102, according to control by the control unit 131.

In step S102, the processing advances to step S103 with operating mode of the display unit 115 in window mode. That is to say, the display unit 115 sets the default operating mode to be window mode.

In step S103, the instructing unit 112 determines whether or not the user of the guest room HA1 of the hotel HA (Fig. 4) wherein the communication device 101 is installed has performed operations to cause the operating mode to be in image display mode.

In step S103, in the case determination is made that the user has not performed an operation to cause the operating mode to be in image display mode, the processing returns to step S102.

Also, in step S103, in the case determination is made that the user has performed an operation to cause the operating mode to be in image display mode, the processing advances to step S104, and the operating mode of the display unit 115 goes to the image display mode. Further, in step S104, the display of the display unit 115 or an unshown TV (Television) or the like displays image candidates to be displayed in image display mode, and the processing is advanced to step S105.

That is to say, the control unit 131 stores in the storage unit 134 a table correlating user IDs (Identification) to identify users and the metadata of the images displayed on the display unit 115 according to the user operation thereof, based on instruction information transmitted from the transmission unit 113 in the past.

On the other hand, the instructing unit 112 generates instructing information to instruct the user ID of the user thereof, according to operation by an employee of hotel HA or operation by the user lodging in the guest room HA1, for example, includes information to the effect that image display mode has been instructed as the operating mode and supplies this to the transmission unit 113.

The transmission unit 113 transmits the instruction information from the instructing unit 112 to the control unit 131, and the control unit 131 receives the instruction information transmitted from the transmission unit 113 as described above.

Further, the control unit 131 confirms whether or not the user ID shown by the instruction information from the transmission unit 113, i.e. the user ID of the user lodging in the guest room HA1, is registered in the table stored in the storage unit 134.

In the case that the user ID of the user lodging in the guest room HA1 is registered in the table stored in the storage unit 134, i.e. in the case the user lodging in the guest room HA1 has, in the past, lodged in guest room HA1 or in another guest room of hotel HA, or another guest room in hotels HB through HD, and in the case that in that event, the set of user ID and image metadata has history of images selected for display on the display unit 115 or the like is registered in the table in storage unit 134, the control unit 131 selects one or more image signals of the metadata matching the metadata correlated to the user ID of the user lodging in the guest room HA1 from the image signals stored in the sending unit 132 that receives the image signal output by the imaging unit 111, the sending unit 133 that receives the image signal output by the imaging unit 121, or another similar sending unit, and generates a candidate screen whereupon an image corresponding to the image signal thereof as a candidate of an image to be displayed in image display mode disposes the candidate image thereof.

Now, Fig. 9B shows an example of the candidate screen.

On the candidate screen, for example the candidates of images to be displayed in image display mode are displayed in a reduced state.

On the other hand, in the case that the user ID of the user lodging in guest room HA1 is not registered in the table stored in the storage unit 134, or in the case that the user ID of the user lodging in guest room HA1 is registered in the table stored in the storage unit 134 but the image signals of the metadata matching the metadata correlated with the user ID is not stored in the storage unit 134, the control unit 131 selects top multiple image signals in order of the number of times of being displayed in the image display mode, for example, from the image signals stored in the sending unit 132 that receives the image signal output by the imaging unit 111, the sending unit 133 that receives the image signal output by the imaging unit 121, and other similar sending units, and generates a candidate screen with the candidate images disposed thereon, out of the images corresponding to the multiple image signals, as candidates to be displayed in the image display mode.

The control unit 131 transmits the candidate screen generated as described above to the communication device 101 via the sending unit 133 or the like. With the communication device 101, in step S104 the candidate screen transmitted from the control unit 131 as described above is received by the reception unit 114 via the switching unit 116 and displayed on the display unit 115.

In step S105, the instructing unit 112 waits for the user lodging in guest room HA1 to select an image to be displayed in image display mode from the images of the candidate screen, generates the instruction information to instruct the image thereof, and supplies this to the transmission unit 113.

Further, in step S105 the transmission unit 113 includes the user ID of the user lodging in guest room HA1 to the instruction information from the instructing unit 112 and transmits this to the control unit 131, and the processing advances to step S106.

In this case, the control unit 131 receives the instruction information from the transmission unit 113, correlates the metadata of the image instructed by the instruction information thereof and the user ID included in the instruction information thereof, and registers this in the table in the storage unit 134.

Thus, the user ID and metadata registered in the table in the storage unit 134 is referenced when generating the next candidate screen by the control unit 131.

Note that the image metadata is included in the image signal output by the imaging unit 111 or the like.

The control unit 131 further controls the sending unit that stores the image signal of the image instructed by the instruction information from the instructing unit 112, i.e., for example, the sending unit 133, and transmits the image signal thereof to the communication device 101.

In step S106, the reception unit 114 receives the image signal transmitted from the sending unit 133 via the switching unit 116, and supplies this to the display unit 115 in image display mode to display.

Note that the user lodging in the guest room HA1 can perform an operation to select an image of scenery that can currently be viewed from the guest room HA1 as the image to be displayed in image display mode.

In the case that an operation is performed to select an image of scenery that can currently be viewed from the guest room HA1, as the image to be displayed in image display mode, the instructing unit 112 supplies the instruction information to instruct the image of the scenery that can currently be viewed from the guest room HA1, to the switching unit 116 via the transmission unit 113.

In the case that the instruction information from the instructing unit 112 instructs an image of scenery that can currently be viewed from the guest room HA1, the switching unit 116 selects the image signal output by the imaging unit 111 and supplies this to the reception unit 114.

Accordingly, in this case, the image corresponding to the image signal output by the imaging unit 111, i.e. the image of the scenery that can currently be viewed from the guest room HA1, is displayed with the display unit 115.

On this other hand, in the case that the instruction information from the transmission unit 113 instructs an image other than the image of scenery that can currently be viewed from the guest room HA1, the switching unit 116 selects an image signal transmitted from the control device 103, supplies this to the reception unit 114.

In this case, an image corresponding to an image signal output by the imaging unit of the communication device of another guest room other than the guest room HA1, i.e. the image of scenery that can be viewed from another guest room is displayed on the display unit 115.

After step S106 the processing advances to step S107, and the instructing unit 112 determines whether or not the user of the guest room HA1 of the hotel HA has performed operations for the operating mode to be in window mode.

In the case determination is made in step S107 that the user has performed operations for the operating mode to be in window mode, the processing returns to step S102.

Also, in the case determination is made in step S107 that the user has not performed operations for the operating mode to be in window mode, the processing advances to step S108, and the instructing unit 112 determines whether or not the user of the guest room HA1 of the hotel HA has performed operations to change the image displayed in image display mode.

In the case determination is made in step S108 that the user has not performed operations to change the image displayed in image display mode, the processing returns to step S106.

Also, in the case determination is made in step S108 that the user has performed operations to change the image displayed in image display mode, the instructing unit 112 generates instruction information to instruct the user ID of the user lodging in the guest room HA1 and supplies this to the transmission unit 113, and the processing returns to step S104.

Hereafter, the transmission unit 113 transmits the instruction information from the instructing unit 112 to the control unit 131, and the control unit 131 generates the candidate screen as described above, based on the instruction information transmitted from the transmission unit 113, and transmits this to the communication device 101. In step S104, as described above, the candidate screen from the control unit 131 is displayed, and similar processing is repeated thereafter.

Note that the instructing unit 112 generates, for example, instruction information to instruct (image signals of) an image satisfying predetermined conditions according to the user operations or the like, thereby enabling the images satisfying the predetermined conditions thereof to become the image displayed on the candidate screen or the image to be displayed in image display mode.

That the image displayed in image display mode is an image that has been imaged at a predetermined time, or that a predetermined object is included in the image, for example, may be used as predetermined conditions.

For example, in the case that an image of early morning imaging has been performed is instructed as the image to be displayed in image display mode according to the user instruction with the instructing unit 112, the user can view early morning scenery (can see an image of early morning scenery) at a point-in-time other than early morning.

Also, for example, in the case that an image including a predetermined object such as the ocean is instructed as the image to be displayed in image display mode according to the user instruction with the instructing unit 112, the user can view ocean scenery which cannot be viewed from the guest room HA1.

Further, the instructing unit 112 can instruct an image to be displayed in image display mode, based on instructions of images performed in the past according to instructions of users that have lodged in the guest room HA1 up to now.

That is to say, for example, based on the history of instructions of images performed in the past according to instructions of users that have lodged in the guest room HA1 up to now, the instructing unit 112 can instruct multiple images having the greatest number of instructions as candidates of images to be displayed in image display mode, and according to the instructions thereof can instruct the image to be displayed in image display mode from the candidate screen generated by the control unit 131, according to user operations.

Note that the point-in-time that the imaging of the image has been performed (imaging point-in-time) or the information such as an object or the like being included in the image is included in the image signal output by the imaging unit 111 or other imaging units, as image metadata.

Also, in the case of the above-described, the image signals output by the imaging units of the communication devices installed in the guest rooms of the hotels HA through HD that are built in a certain community are transmitted to the communication device 101 installed in the guest room HA1, and the image corresponding to the image signals thereof are displayed on the display unit 115 with the communication device 101, but images that have been imaged in other communities can also be displayed on the display unit 115.

That is to say, the image signals of the images imaged in another community can be transmitted to the communication device 101, and the image corresponding to the image signals thereof can be displayed on the display unit 115 with the communication device 101.

However, in the case of displaying the images of the scenery imaged in a community that is distant from the community in Fig. 4 (including a foreign country) on the display unit 115, the user who has come to lodge in the community in Fig. 4 can lose the feeling (sensation) of lodging in the community in Fig. 4, whereby regarding a community that is fairly distant, it is desirable for the images of the scenery imaged in the community thereof to not be displayed on the display unit 115.

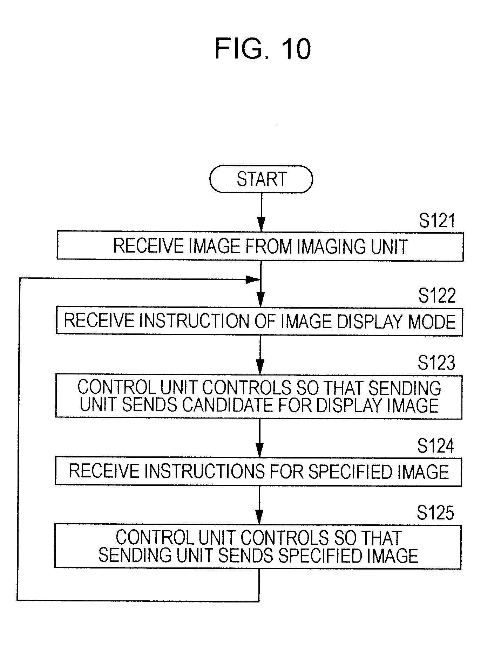

Next, the processing of the control device 103 in Fig. 8 will be described with reference to Fig. 10.

In step S121, the control device 103 waits for the supplying of the image signals from the imaging units of the communication device making up the collaborative processing system to start, and starts receiving the image signals thereof.

That is to say, with the communication device 101, in step S101 in Fig. 9A, as described above, the imaging unit 111 images an image and starts outputting the image signals to the sending unit 132.

Similarly, with the communication device 102, the imaging unit 121 images an image and starts outputting the image signals to the sending unit 133.

The sending unit 132 receives and stores the image signals output from the imaging unit 111. The sending unit 133 also receives and stores the image signals output by the imaging unit 121. The sending units (unshown) that receive the image signals output by imaging units of other communication devices also, similarly receive and store the image signals.

Subsequently, for example, as described in step S104 in Fig. 9A, the processing awaits instruction information including information to the effect that the image display mode has been instructed as the operating mode to be transmitted from the transmission unit 113 of the communication device 101 to the control unit 131, and advances from step S121 to step S122, the control unit 131 receives instruction information from the transmission unit 113, and the processing advances to step S123.

In step S123, the control unit 131 generates a candidate screen (Fig. 9B) as described with Fig. 9, according to the instruction information received in step S122, and controls the sending unit 133 for example, so as to transmit the candidate screen thereof to the communication device 101.

Subsequently, for example, as described in step S105 of Fig. 9A, the processing awaits the instruction information generated according to operations by the user that selects the image to be displayed in image display mode from the images on the candidate screen to be transmitted from the transmission unit 113 of the communication device 101 to the control unit 131, the processing advances from step S123 to step S124, and the control unit 131 receives the instruction information from the transmission unit 113 and the processing advances to step S125.

In step S125, according to the instruction information received in step S124, the control unit 131 controls the sending unit 133 for example so as to transmit the image signals of the image instructed by the instruction information thereof, and the processing returns to step S122.

Under control of the control unit 131, the sending unit 133 transmits the image signals output by the imaging unit 121 for example, as the image signal of the image instructed by the instruction information, to the communication device 101.

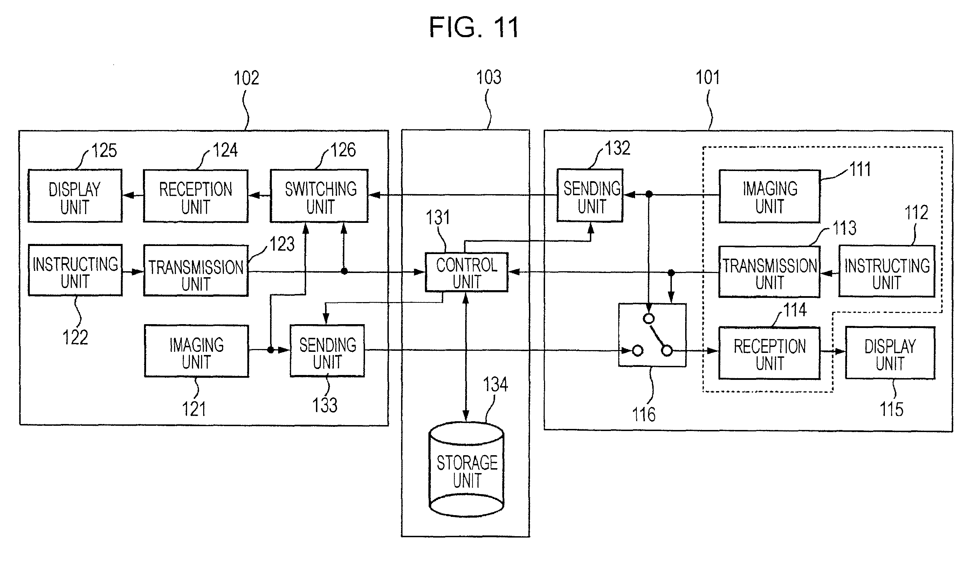

Next, Fig. 11 shows a second configuration example of the collaborative processing system applied to the community in Fig. 4.

Note that the portions in the diagram that correspond to the case in Fig. 8 have the same reference numerals, and the description thereof below will be omitted as appropriate.

That is to say, the collaborative processing system in Fig. 11 is made up similar to the case in Fig. 8, except that the sending unit 132 is provided in the communication device 101 instead of the control device 103, and the sending unit 133 is provided in the communication device 102 instead of the control device 103.

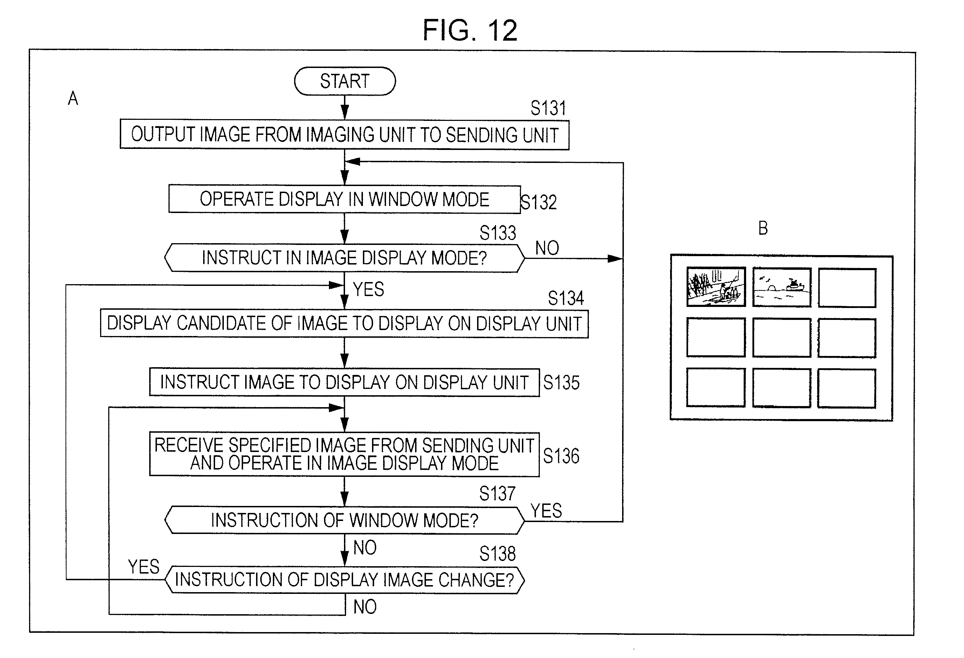

Next, the processing of the communication device 101 in Fig. 11 will be described with reference to Fig. 12.

A of Fig. 12 is a flowchart describing the processing of the communication device 101 in Fig. 11.

With the communication device 101 in Fig. 11, in steps S131 through S138, processing that is similar respectively to steps S101 through S108 in Fig. 9A is performed.

That is to say, with the communication device 101, in step S131 the imaging unit 111 starts to take an image output the image signals to the sending unit 132, and the processing advances to step S132.

The sending unit 132 receives and stores the image signals from the imaging unit 111.

In step S132, the display unit 115 has the operating mode as window mode, similar to the step S102 in Fig. 9A, and the processing advances to step S133.

In step S133, similar to step S103 in Fig. 9A, the instructing unit 112 determines whether or not the user of the guest room HA1 of the hotel HA (Fig. 4) has performed operations to cause the operating mode to be in image display mode.

In the case determination is made in step S133 that the user has not performed operations to cause the operating mode to be in image display mode, the processing returns to step S132.

Also, in the case determination is made in step S133 that the user has performed operations to cause the operating mode to be in image display mode, the processing advances to step S134, and similar to step S104 in Fig. 9A, the display unit 115 displays the candidate screen on which are disposed images to be displayed in image display mode, with the operating mode as the image display mode, and the processing advances to step S135.

Now, B in Fig. 12 shows an example of a candidate screen displayed in step S134.

The candidate screen of B in Fig. 12 is similar to the candidate screen in Fig. 9B, and the description thereof will be omitted.

Subsequently, in step S135 through S138, processing similar to that in steps S105 through S108 in Fig. 9A respectively is performed with the communication device 101.

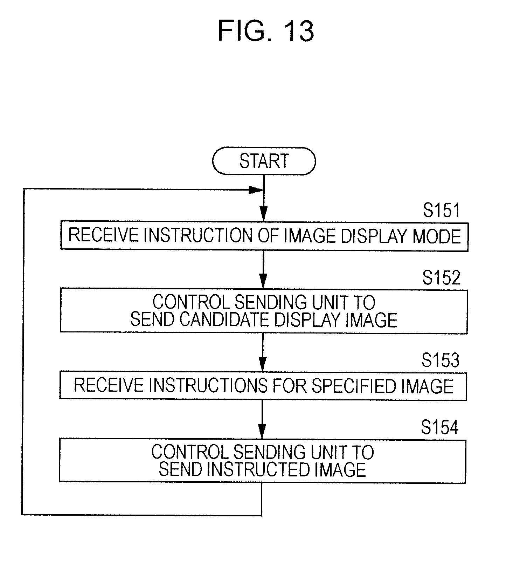

Next, the processing of the control device 103 in Fig. 11 will be described with reference to Fig. 13.

With the control device 103, processing similar to that in steps S122 through S125 in Fig. 10 is performed.

That is to say, similar to the case in Fig. 10, the control device 103 awaits the instruction information including information to the effect that the image display mode has been instructed as the operating mode to be transmitted from the transmission unit 113 of the communication device 101 or the like, for example, and in step S151 the control unit 131 receives the instruction information from the transmission unit 113 and the processing advances to step S152.

In step S152 the control unit 131 generates a candidate screen (B in Fig. 12) according to the instruction information received in step S151, and controls the sending unit 133 for example, so as to transmit the candidate screen thereof.

Subsequently, the processing awaits the instruction information generated according to operations by the user selecting the image to be displayed in image display mode, of the images on the candidate screen, to be transmitted from the transmission unit 113 of the communication device 101, the processing advances from step S152 to step S153, the control unit 131 receives the instruction information from the transmission unit 113, and the processing advances to step S154.

In step S154, according to the instruction information received in step S153, the control unit 131 controls the sending unit 133 for example, to transmit the image signals of the image instructed by the instruction information thereof, and the processing returns to the step S151.

According to control by the control unit 131, the sending unit 133 transmits the image signals output by the imaging unit 121 or the image signals stored in the storage unit 134 as the image signals of the image instructed by the instruction information, to the communication device 101.

Note that control unit 131 performs the processing in Fig. 10 and Fig. 13 as to the communication device 101, as well as the communication device 102 and other communication devices making up the collaborative processing system.

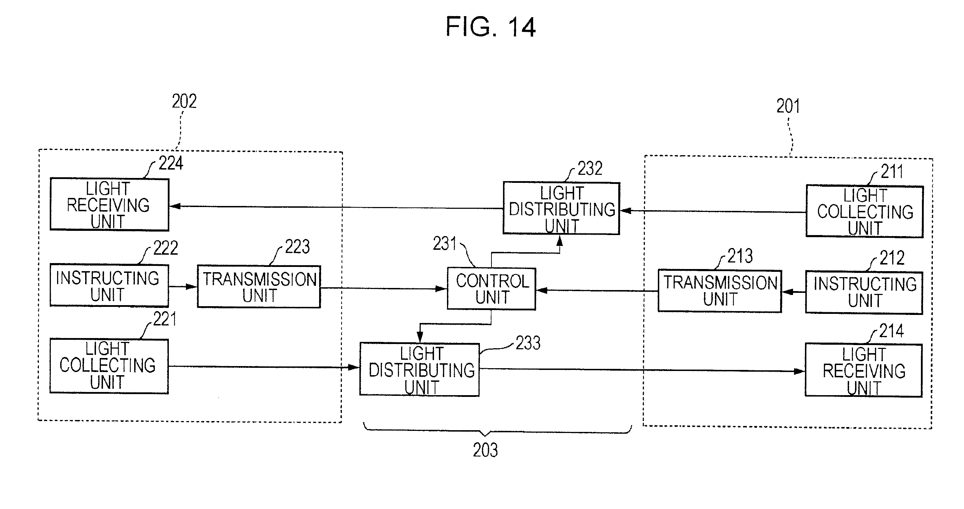

Next, Fig. 14 shows a third configuration example of the collaborative processing system applied to the community in Fig. 4.

In Fig. 14, the collaborative processing system is made up of multiple communication devices 201 and 202 and the control device 203.

The communication device 201 is installed in the guest room HA1 of the hotel HA, and the communication device 202 is installed in the guest room HB1 of the hotel HB (Fig. 4), for example, which is one of the other guest rooms besides the guest room HA1.

Note that a communication device similar to the communication devices 201 and 202 are installed also in the guest rooms of hotel HA other than the guest room HA1, the guest rooms in hotel HB other than the guest room HB1, the guest rooms in hotel HC, and the guest rooms in hotel HD, but the descriptions thereof will be omitted.

Also, the control device 203 can be installed in a control center independent from the hotels HA through HD, and for example can be installed in the hotels HA or HB so as to be integrated with the communication devices 201 or 202.

Further, the functions of the control device 203 can be divided and handled by the communication devices 201 and 202 as well as other communication devices making up the collaborative processing system.

The communication device 201 is made up of a light collecting unit 211, instructing unit 212, transmission unit 213, and light receiving unit 214.

The light collecting unit 211 acts as the sensor unit 31 in Fig. 2. The light collecting unit 211 collects sunlight (senses the light), and inserts (supplies) this to the light distributing unit 232.

The instructing unit 212 acts as the instructing unit 32 in Fig. 2. The instructing unit 212 instructs the light which is the sensor output of the light collecting unit 221 or the like which the other communication device 202 has, according to user operation or the like, for example. That is to say, in accordance with user operations, the instructing unit 212 generates instruction information corresponding to the instruction of light from the light collecting unit 221 or the like which the other communication device 202 has, and supplies this to the transmission unit 213.

The transmission unit 214 acts as the transmission unit 33 in Fig. 2. The Transmission unit 213 transmits the instruction information from the instructing unit 212 to the control unit 231.

The light receiving unit 213 acts as the receiving unit 34 in Fig. 2. The light receiving unit 214 receives light from the light distributing unit 233 which provides the light, such light being the sensor output instructed according to the instruction information transmitted to the control unit 231, i.e. light output by the light collecting unit which the other communication device 202 has, for example.

The communication device 202 is made up similar to the communication device 201.

That is to say, the communication device 202 is made up of a light collecting unit 221, instructing unit 222, transmission unit 223, and light receiving unit 224 which are similar respectively to the light collecting unit 211, instructing unit 212, transmission unit 213, and light receiving unit 214.

Note that with the communication device 202, the light which is the sensor output of the light collecting unit 221 is supplied to the light distributing unit 233. Also, the light receiving unit 224 receives the light collected by the light collecting unit 211 of the communication device 201, for example, which is the sensor output instructed according to the instruction information transmitted to the control unit 231, from the light distributing unit 232.

The control device 203 is made up of a control unit 231 and light distributing units 232 and 233.

The control unit 231 acts as the control unit 51 in Fig. 2. The control 231 controls the provision of sensor output by the light distributing units 232 and 233, i.e. the light collected by the light collecting unit 211 and the light collected by the light collecting unit 221, according to the instruction information transmitted from the transmission unit 213 of the communication device 201 and the instruction information transmitted from the transmission unit 223 of the communication device 202.

The light distributing unit 232 acts as the sending unit 52 in Fig. 2. The light distributing unit 232 provides (sends) the light collected by the light collecting unit 221 of the communication device 201 to a communication device other than the communication device 201 (e.g. the communication device 202 or another communication device making up the collaborative processing system), according to the control by the control unit 231.

The light distributing unit 233 acts as the sending unit 53 in Fig. 2. The light distributing unit 233 provides (sends) the light collected by the light collecting unit 221 of the communication device 202 to a communication device other than the communication device 202 (e.g. the communication device 201 or another communication device making up the collaborative processing system), according to the control by the control unit 231.

With the collaborative processing system made up as described above, the light collected by the light collecting unit 211 of the communication unit 201 installed in the guest room HA1 of the hotel HA is incident in the light distributing unit 232, while the light collected by the light collecting unit 221 of the communication device 202 installed in the guest room HB1 of the hotel HB is incident in the light distributing unit 233.

Subsequently, for example, if the user of the guest room HA1 performs operations to instruct the image display and brightness of the lighting and so forth, the instructing unit 212 generates instruction information to instructing the light collected by the light collecting unit 221 of the communication device 202, for example, according to the user operations, and supplies this to the transmission unit 213.

The transmission unit 213 transmits the instruction information from the instructing unit 212 to the control unit 231.

The control unit 231 receives the instruction information transmitted from the transmission unit 213 of the communication device 201, and controls the provision of light to the communication device 201 according to the instruction information thereof.

That is to say, the control unit 231 controls the light distributing unit 233 wherein light collected by the light collecting unit 221 of the communication device 202 is incident, for example, and provides the light collected by the light collecting unit 221 to the communication device 201.

With the communication device 201, the light receiving unit 214 receives the light provided from the light distributing unit 233.

The light received by the light receiving unit 214 of the communication device 201 is used for displaying an image or for adjusting the brightness of the illumination in the guest room HA1.

Accordingly, in the case that of the hotels HA and HB, the hotel HB has better sunlight, for example, the light collected at the hotel HB can be shared with the hotel HA, whereby at either hotel HA or HB, a similar environment of light can be provided.

Note that the light distributing unit 232 that provides the light collected by the light collecting unit 211 of the communication device 201 to another communication device can be provided in the communication device 201 instead of the control device 203.

Similarly, the light distributing unit 233 that provides the light collected by the light collecting unit 221 of the communication device 202 to another communication device can be provided in the communication device 202 instead of the control device 203.

Also, besides providing one light collecting unit 211 to the guest room HA1, one light collecting unit 211 can be provided in multiple guest rooms of the hotel HA or provided in the hotel HA. The light collecting unit 221 is also similar.

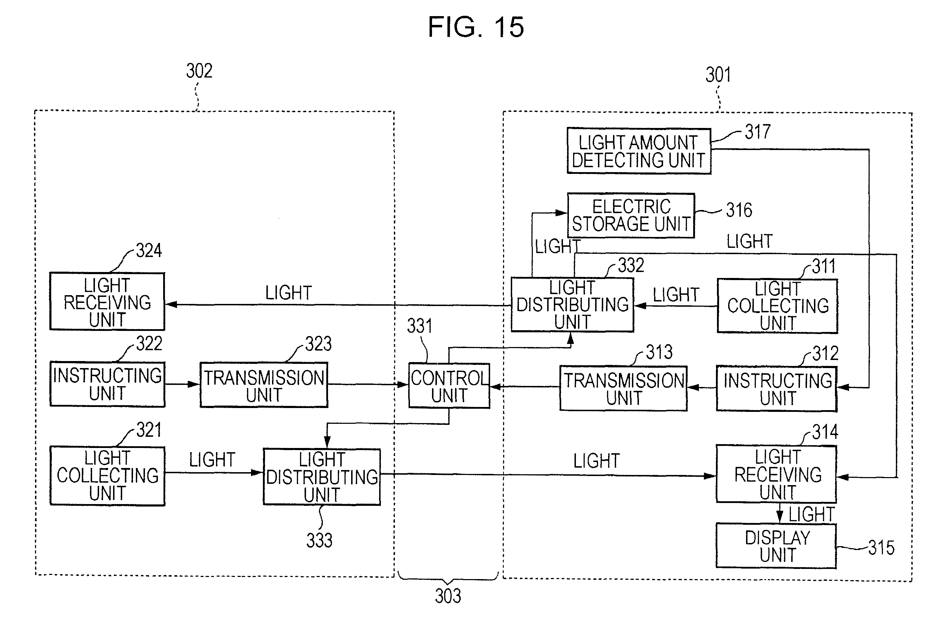

Next, Fig. 15 shows a fourth configuration example of the collaborative processing system applied to the community in Fig. 4.

In Fig. 15, the collaborative processing system is made up of multiple communication devices 301 and 302 and a control device 303.

The communication device 301 is installed in the guest room HA1 of the hotel HA (Fig. 4), and the communication device 302 is installed in the guest room HB1 of the hotel HB, for example, which is one of the other guest rooms besides the guest room HA1.

Note that a communication device similar to the communication devices 301 and 302 are installed also in the guest rooms of hotel HA other than the guest room HA1, the guest rooms in hotel HB other than the guest room HB1, the guest rooms in hotel HC, and the guest rooms in hotel HD, but the descriptions thereof will be omitted.

Also, the control device 303 can be installed in a control center independent from the hotels HA through HD, and for example can be installed in the hotels HA or HB so as to be integrated with the communication devices 301 or 302.

Further, the functions of the control device 303 can be divided and handled by the communication devices 301 and 302 as well as other communication devices making up the collaborative processing system.

The communication device 301 is made up from a light collecting unit 311, instructing unit 312, transmission unit 313, light receiving unit 314, display unit 315, electric storage unit 316, light amount detecting unit 317, and light distributing unit 332.

The light collecting unit 311 acts as the sensor unit 31 in Fig. 2. The light collecting unit 311 collects the sunlight (senses the light) and inserts (supplies) this into the light distributing unit 332.

The instructing unit 312 acts as the instructing unit 32 in Fig. 2. The instructing unit 312 performs predetermined instruction according to user operations, for example, or light amount or the like detected by the light amount detecting unit 317. That is to say, the instructing unit 312 generates instruction information to perform predetermined instructions according to user operations or light amount or the like detected by the light amount detecting unit 317, and supplies this to the transmission unit 313.

The transmission unit 313 acts as the transmission unit 33 in Fig. 2. The transmission unit 313 transmits the instruction information from the instructing unit 312 to the control unit 331.

The light receiving unit 314 acts as a receiving unit 34 in Fig. 2. The light receiving unit 314 receives the sensor output instructed according to the instruction information transmitted to the control unit 331, i.e. the light output by the light collecting unit 321 which the other communication device 302 has, for example, from the light distributing unit 333 which provides such light, and supplies this to the display unit 315.

Also, the light receiving unit 314 receives the light provided from the light distributing unit 332 and supplies this to the display unit 315.

The display unit 315 uses the light from the light receiving unit 314 or the like to display an image or to illuminate the room interior of the guest room HA1.

The electric storage unit 316 uses the light supplied from the light distributing unit 332 and stores the electricity obtained by performing photovoltaic power generation (a technique to convert light energy into electric energy using a photoelectric effect of a silicon semiconductor). The electric power stored in the electric storage unit 316 is used for image display, illumination of the room interior of the guest room HA1, and electric appliances for other uses.

The light amount detecting unit 317 detects the light amount of the light collected with the light collecting unit 311, and supplies this to the instructing unit 312.

Under control of the control unit 331, the light distributing unit 332 acts as the sending unit 52 in Fig. 2. The light distributing unit 332 performs light distribution to provide (distribute) the light collected by the light collecting unit 311 of the communication device 301 to a communication device other than the communication device 301 (e.g., the communication device 302 or another communication device making up the collaborative processing system), the light receiving unit 314, or the electric storage unit 316.

The communication device 302 is made up similar to the communication device 301.

Note that in Fig. 15, the block making up the communication device 302 only shows the light collecting unit 321, instructing unit 322, transmission unit 323, light receiving unit 324, and light distributing unit 333 which correspond respectively to the light collecting unit 311, instructing unit 312, transmission unit 313, light receiving unit 314, and light distributing unit 332, but the communication device 302 also has provided thereto a block that corresponds to the display unit 315, electric storage unit 316, and light amount detecting unit 317.

However, one or more of the communication devices which are not all of the multiple transmission devices making up the collaborative processing system, such as the communication device 302 or the like, can be made up without providing a block that corresponds to the display unit 315, electric storage unit 316, and light amount detecting unit 317.

The control device 303 is made up of the control unit 331.

The control unit 331 acts as the control unit 51 in Fig. 2. The control unit 331 controls the sensor output by the light distributing units 332 and 333, i.e. the provision of light collected by the light collecting unit 311 or the light collected by the light collecting unit 321, according to the instruction information transmitted from the transmission unit 313 of the communication device 301 and the instruction information transmitted from the transmission unit 323 of the communication device 302.

Note that the light distribution unit 332 which provides the light collected by the light collecting unit 311 of the communication device 301 to other communication devices can be provided in the control device 303 instead of the communication device 301.

Similarly, the light distribution unit 333 which provides the light collected by the light collecting unit 311 of the communication device 302 to other communication devices can be provided in the control device 303 instead of the communication device 302.

Also, besides providing one light collecting unit 311 to the guest room HA1, one light collecting unit 311 can be provided in multiple guest rooms of the hotel HA or provided in the hotel HA. The light collecting unit 321 is also similar.

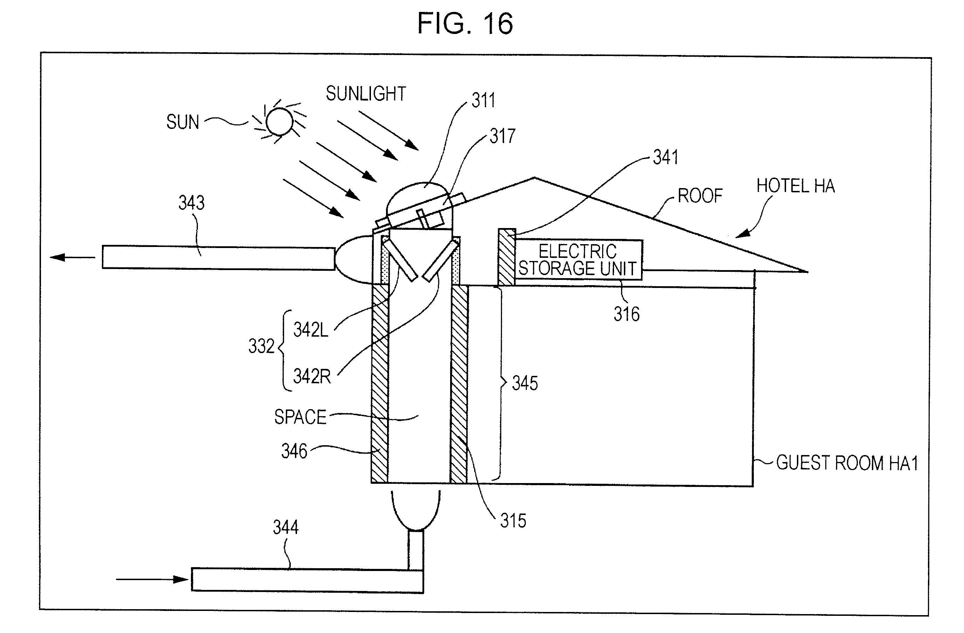

Next, Fig. 16 is a cross-sectional diagram showing a configuration example of the guest room HA1 wherein the communication device 301 of Fig. 15 is installed.

The light collecting unit 311 is installed on the roof of the hotel HA or in a location such as the roof which has good sunlight.

The light collecting unit 311 collects the sunlight as described in Fig. 15, and supplies the light obtained by such light collecting to the light distributing unit 332.

Note that the light amount detecting unit 317 is attached in a position where the light amount of the light collected by the light collecting unit 311 can be detected.

The light distributing unit 332 is made up of flat plate-shaped reflective plates 342L and 342R, and distributes the light collected by the light collecting unit 311 to other communication devices, the daylighting unit 345, or the solar panel 341.

That is to say, in Fig. 16, an optical fiber 343 that is tied to the other communication device is provided on the left side of the light distributing unit 332, and the daylighting unit 345 is provided on the lower side of the light distributing unit 332. Also, a solar panel 341 is provided on the right side of the light distributing unit 332.

In the case that the light distributing unit 332 distributes the light collected by the light collecting unit 311 to other communication devices, the light collected by the light collecting unit 311 is reflected to the left side, whereby the light collected by the light collecting unit 311 is output (provides) to the light receiving unit of the other communication device such as the light receiving unit 324 (Fig. 15) of the communication device 302, for example, via the optical fiber 343.

Also, in the case of distributing the light collected by the light collecting unit 311 to the daylighting unit 345, the light distributing unit 332 allows the light collected by the light collecting unit 311 to pass through on the lower side, thereby emitting the light collected by the light collecting unit 311 to the daylighting unit 345.

Further, in the case of distributing the light collected by the light collecting unit 311 to the solar panel 341, the light distributing unit 332 reflects the light collected by the light collecting unit 311 to the right side, thereby emitting the light collected by the light collecting unit 311 to the solar panel 341.

Now, the solar panel 341 uses the light from the light distributing unit 332 to perform photovoltaic power generation, and supplies the electricity (electric power) obtained as a result thereof to the electric storage unit 316. The electric storage unit 316 stores the power supplied from the solar panel 341 as described above.

The daylighting unit 345 is made up of a flat plate-shaped light output panel 346 and another flat plate-shaped display unit 315 so as to be layered with a space formed in between. That is to say, the daylighting unit 345 is configured by sandwiching a space between the light output panel 346 and the display unit 315.

The daylighting unit 345 is provided on the lower side of the light distributing unit 332, and makes up a wall face of the guest room HA1 in the direction that the actual mountain scenery can be viewed.

Note that the daylighting unit 345 is installed so that the display unit 315 faces the room interior side of the guest room HA1, and the light output panel 346 faces the room exterior side (outside) of the guest room HA1.

The daylighting unit 345 performs daylighting, and uses the light obtained by such daylighting to perform image display or illumination of the room interior of the guest room HA1 or the like.

That is to say, light that is distributed from the light distributing unit 332 is incident into the space of the daylighting unit 345. Further, light that is collected by the light collecting unit 321 (Fig. 15) of the communication device 302 and that is distributed from other communication devices such as the light distributed from the light distributing unit 333 is incident via the optical fiber 344.

Now the light incident into the space of the daylighting unit 345 becomes parallel light, for example.

The light output panel 346 emits the dispersed light serving as light for displaying images on the display unit 315 or the like to the display unit 315.

That is to say, the light output panel 346 disperses the light (parallel light) incident in the space of the daylighting unit 345, and emits the dispersed light obtained as a result thereof to the display unit 315.

Also, the light output panel 346 also emits light itself, disperses this light, and emits this to the display unit 315.

The display unit 315 is made up of the liquid crystal display device described in Figs. 6 and 7, for example, and displays an image with the light emitting from the light output panel 346 (dispersed light) as backlighting. Also, the display unit 315 adjusts the light amount incident in the room interior of the guest room HA1 from the light emitted by the light output panel 346, as described in Fig. 7, thereby functioning also as an illumination device.

Now, hereafter, the operating mode for the display unit 315 to display an image will be called image mode, and the operating mode for the display unit 315 to function as an illumination device will be called illuminating mode, as appropriate.

Note that the guest room HA1 can be provided with two of a daylighting unit 345 for the display unit 315 to operate in image mode, and a daylighting unit 345 for the display unit 315 to operate in illumination mode.

Next, a sunlight daylighting device as described in Japanese Unexamined Patent Application Publication No. 09-270204 can be used as the light collecting unit 311 shown in Fig. 16.

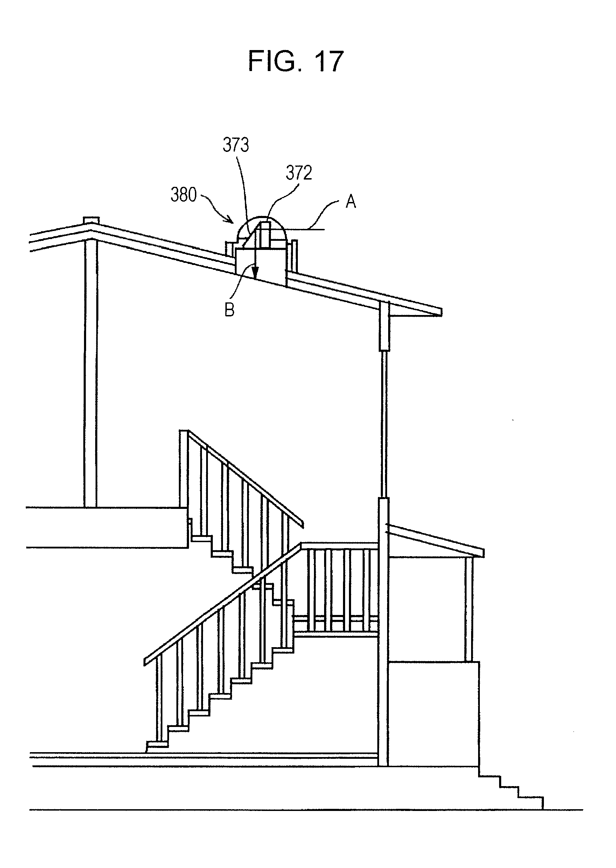

Fig. 17 shows a configuration example of a sunlight daylighting device used as the light collecting unit 311.

In Fig. 17, the sunlight daylighting device 380 is positioned on the roof (rooftop) of a building or the like, collects light by allowing the sunlight as shown with arrow A through a lens holder 372 wherein a large number of lenses are positioned, reflects the collected sunlight by the reflective plate 373 and guides the light within the building by guiding in the direction shown with arrow B.

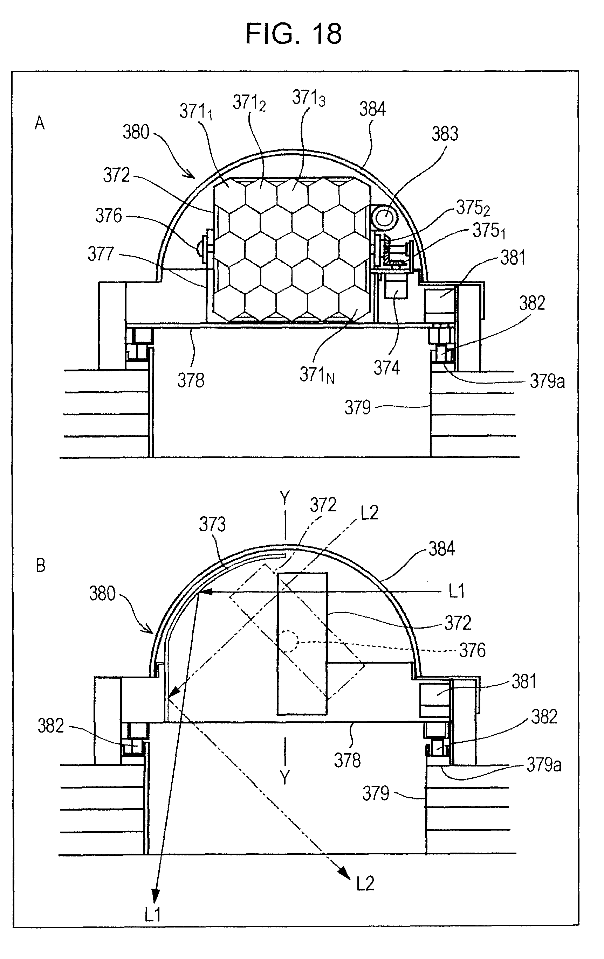

Fig. 18 is a diagram showing a more detailed configuration example of the sunlight daylighting device 380 in Fig. 17.

If we say now that the sunlight light-receiving face for the sunlight daylighting device 380 to receive the sunlight is the front face, A of Fig. 18 is a frontal diagram viewing the sunlight daylighting device 380 from the front face, and B of Fig. 18 is a side diagram viewing the sunlight daylighting device 380 from the side face.

The lens holder 372 holds a large number of N lenses 371₁, 371₂, 371₃, ..., 371_{N}, where each lens 371ₙ (n = 1, 2, ..., N) collects the sunlight.

The reflective plate 373 is provided on the rear side of the lens holder 372, and the lens 371ₙ reflects the collected light and guides this within the building (light distributing unit 332).

Note that the lens holder 372 is held by a lens holder supporting member 377 so as to freely rotate around a horizontal shaft 376 so as to be rotatable.

The lens holder 372 is then driven by a motor 374 via gears 375₁ and 375₂, and rotates (turns) with the horizontal shaft 376 as the center thereof.

Thus, when the sun is low, such as in the morning or evening or the like, the lens holder 372 is in a state such as shown by the solid line in B of Fig. 18, whereby the sunlight L1 is collected by the lens 371ₙ and is reflected by the reflective plate 373 and guided within the building, and when the sun is high, such as at noontime or the like, is in a state such as shown by the broken line, whereby the sunlight L2 is collected by the lens 371ₙ and is reflected by the reflective plate 373 and guided within the building.

The lens holder supporting member 377 is attached so to be integrated with a rotational base 378, a roller 382 of the rotational base 378 thereof is mounted so as to freely rotate on a rail 379a of a cylindrical fixed base 379, and is rotated around a vertical axis Y-Y by a motor 381.

The sensor 383 detects the direction of the sun. based on the direction of the sun detected by the sensor 383, the motor 374 and 381 are controlled, whereby the faces of the lens 371ₙ of the lens holder 372 (optical axis and vertical face) are controlled so as to face the direction of the sun.

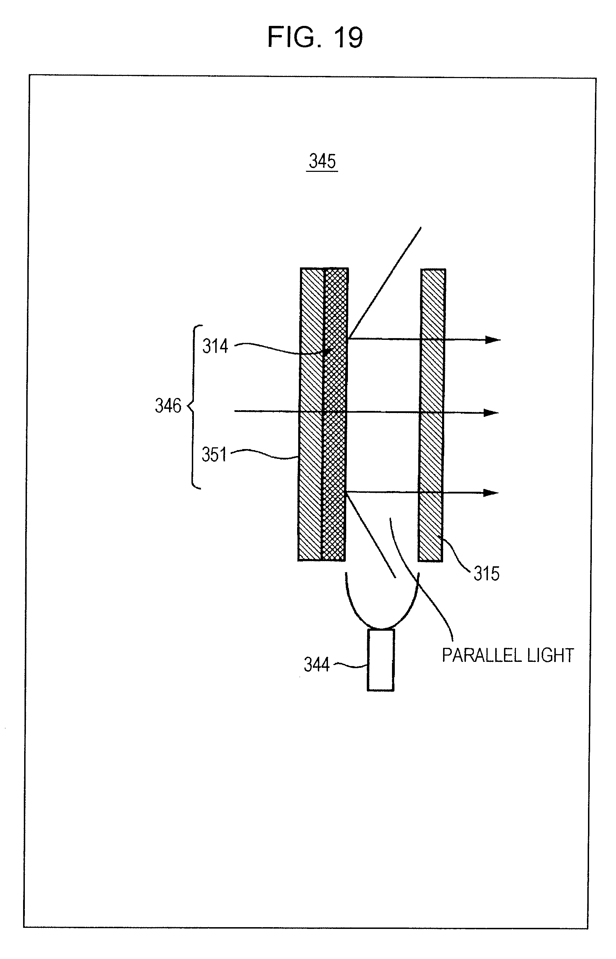

Next, Fig. 19 is a cross-sectional diagram showing a configuration example of the daylighting unit 345 in Fig. 16.

As described in Fig. 16, the daylighting unit 345 is made up of a display unit 315 disposed on the room interior side of the guest room HA1 and a light output panel 346 disposed on the room exterior side (outside).

In Fig. 19, the light output panel 346 is made up of a flat plate-shaped backlighting unit 351 and a similarly flat plate-shaped light receiving unit 314 that are layered.

Note that the backlighting unit 351 is disposed on the room exterior side of the guest room HA1, and the light receiving unit 314 is disposed on the room interior side (display unit 315 side).

In Fig. 19, the light receiving unit 314 is made up of the liquid crystal display device described in Fig. 6 and Fig. 7, similar to the display unit 315, for example.

Also, the backlighting unit 351 emits light serving as backlighting, using the electrical power stored in the electric storage unit 316 as a power source.

The display unit 315 displays an image with the light obtained by daylighting with the daylighting unit 345 or the light emitted by the backlighting unit 351 as backlighting, or functions as an illumination device.

In the case that the display unit 315 displays an image using the light obtained by the daylighting with the daylighting unit 345 as backlighting, the liquid crystal display device serving as the light receiving unit 314 is in the fourth state (D in Fig. 7) of the liquid crystal cell 152 (Fig. 6) which is the light blocking state.

The light receiving unit 314 blocks the incident light from the backlighting unit 351 side, while receiving the light incident from the light distributing unit 332 and the light incident via the optical fiber 344 from other communication devices, and reflects this to the display unit 315 side.

Also, at the liquid crystal display device serving as the display unit 315, the liquid crystal cell 151 (Fig. 6) is in a light dispersing state, and the liquid crystal cell 152 is in a light transmitting state or light blocking state, by pixel units, according to the image signal, which is the second state (B in Fig. 7).

The display unit 315 disperses the light reflected with the light receiving unit 314, the light incident from the light distributing unit 332, and the light incident via the optical fiber 344 from the other communication devices, and controls the transmittance (blocking) of dispersed light obtained by such dispersion with the liquid crystal cell 152, thereby displaying an image.

On the other hand, in the case that the display unit 315 displays an image using the light emitted by the backlighting unit 351 as the backlighting, at the liquid crystal display device serving as the light receiving unit 314 the liquid crystal cell 151 (Fig. 6) is in a light dispersing state, and the liquid crystal cell 152 is in a light transmitting state, which is the third state (C in Fig. 7).

The light receiving unit 314 disperses the light incident from the backlighting unit 351 side, and emits this to the display unit 315.

The liquid crystal display device serving as the display unit 315 goes to the second state (B in Fig. 7) for example, similar to the case as described above, and displays an image using the light from the light receiving unit 314 as backlighting.

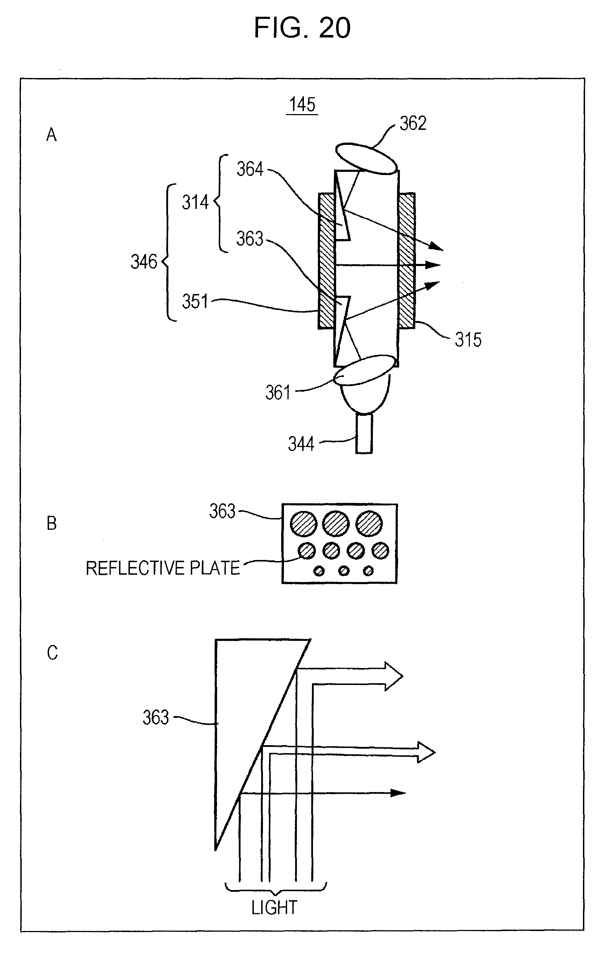

Next, Fig. 20 is a diagram showing another configuration example of the daylighting unit 345 in Fig. 16.

That is to say, A in Fig. 20 is a cross-sectional diagram of another configuration example of the daylighting unit 345 in Fig. 16.

In A of Fig. 20, the light receiving unit 314 making up the light output panel 346 is made up of two triangle prisms 363 and 364 instead of the liquid crystal display device in Fig. 6.

Further, in A of Fig. 20, a lens 361 is provided on the optical fiber 344 side of the daylighting unit 345, while a lens 362 is provided on the light distributing unit 332 (Fig. 16) side.

The lens 361 collects the light incident in the daylighting unit 345 (parallel light) via the optical fiber 344 from the other communication devices on the prism 363. The lens 362 collects the light incident in the daylighting unit 345 from the light distributing unit 332 on the prism 364.

The triangle prism 363 is disposed so that one of the side faces thereof is in contact with the backlighting unit 351, receives light from the lens 361, and reflects to the display unit 315 side.

The triangle prism 364 also is disposed so that one of the side faces thereof is in contact with the backlighting unit 351, receives light from the lens 362, and reflects to the display unit 315 side.

Note that the prism 363 is disposed at a position near the optical fiber 344 of the backlighting unit 351 so that one of the other side faces is facing the vertical mid-point side of the backlighting unit 351.

Also, the prism 364 is disposed at a position near the light distributing unit 332 (Fig. 16) of the backlighting unit 351 so that one of the other side faces is facing the vertical mid-point side of the backlighting unit 351.

B in Fig. 20 shows a configuration example of the prism 363 seen from the display unit 315 side.

A cylindrical reflective plate, for example, is provided on the face of the prism 363 that light from the lens 361 is collected, and the light from the lens 361 is received and reflected with the reflective plate.

Regarding the reflective plate of the prism 363, the reflective plate at the mid-point side vertically of the backlighting unit 351 has a greater area, and accordingly, a greater amount of light is reflected with the reflective plate on the mid-point side vertically of the backlighting unit 351.

That is to say, C in Fig. 20 schematically shows the light amount of the light reflected with the prism 363.

As shown with C in Fig. 20, with the prism 363, the position nearer the mid-point side vertically on the backlighting unit 351 reflects a greater amount of light.

Note that the prism 364 is also similarly configured as the prism 363.

With the daylighting unit 345 also configured as described above, the display unit 315 displays an image using the light obtained by the daylight of the daylighting unit 345 or the light emitted by the backlighting unit 351, or functions as an illumination device.

In the case that the display unit 315 displays an image using the light obtained by the daylight of the daylighting unit 345 as backlighting, the prism 363 serving as the light receiving unit 314 receives the light that is incident via the optical fiber 344 from the other communication devices and that his collected with the lens 361, and reflects this to the display unit 315 side.

Further, the prism 364 serving as the light receiving unit 314 receives light incident from the light distributing unit 332 and that is collected with the lens 362, and reflects this to the display unit 315 side.

Also, with the liquid crystal display device serving as the display unit 315, the liquid crystal cell 151 (Fig. 6) goes to a light dispersing state, and the liquid crystal cell 152 goes to a light transmitting state or light blocking state by pixel units, according to the image signal, which is the second state (B in Fig. 7).

The display unit 315 disperses the light reflected by the prisms 363 and 364 serving as the light receiving unit 314 with the liquid crystal cell 151 in the light dispersion state, and displays an image by controlling the transmittance (blocking) of the dispersed light obtained by such dispersion with the liquid crystal cell 152.

On the other hand, in the case that the display unit 315 displays an image using the light emitted by the backlighting unit 351 as backlighting, the light emitted by the backlighting unit 351 is incident in the display unit 315.

The liquid crystal display device serving as the display unit 315 goes to the second state (B in Fig. 7) similar to the above-described case, for example, and displays the image using the light from the backlighting unit 351 as backlighting.

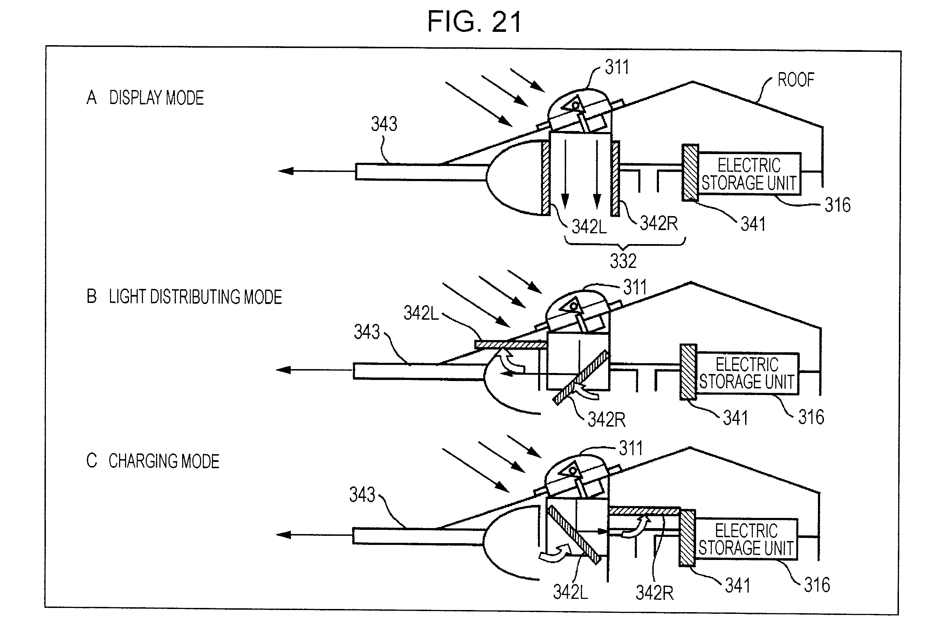

Next, the operation of the light distributing unit 332 in Fig. 16 will be described with reference to Fig. 21.

The light distributing unit 332 is made up of flat plate-shaped reflective plates 342L and 342R, as described in Fig. 16, and the light collected with the light collecting unit 311 is distributed (provided) (guided)to the other communication devices, daylighting unit 345, or solar panel 341.

Now, the operating mode of the light distributing unit 332 to provide the light collected with the light collecting unit 311 to the daylighting unit 345 is called a display mode, the operating mode to provide to the other communication devices is called a light distributing mode, and the operating mode to provide to the solar panel 341 is called charging mode, respectively.

A in Fig. 21 shows the state of the light distributing unit 332 in display mode.

The plate-shaped reflective plates 342L and 342R making up the light distributing unit 332 are disposed, for example, having spacing a similar width as the daylighting unit 345 (Fig. 16).

Further, the reflective plate 342L is disposed on the upper side of the light output panel 346 along an extended line of the light output panel 346 (Fig. 16) on the room exterior side of the light distributing unit 332, and the reflective 342R is disposed on the upper side of the display unit 315 along an extended line of the display unit 315 (Fig. 16) on the room interior side of the light distributing unit 332.

Also, the flat plate-shaped reflective plates 342L and 342R are rotatable around an axis extending in the depth direction on the upper side of the diagram.

In display mode, the reflective plates 342L and 342R making up the light distributing unit 332 each are rotated in a state to be parallel to the light output panel 346 (Fig. 16) and the display unit 315, thereby providing (guiding) the light collected by the light collecting unit 311 to the daylighting unit 345 positioned on the lower side.

With the daylighting unit 345, the light provided thus from the light distributing unit 332 is used and image display and so forth is performed with the display unit 315, as described with Fig. 19 and Fig. 20.

B in Fig. 21 shows the state of the light distributing unit 332 in light distributing mode.

In light distributing mode, of the reflective plates 342L and 342R making up the light distributing unit 332, the reflective plate 342R on the right side is rotates so as to reflect the light collected by the light collecting unit 311 to the optical fiber 343 side on the left side, and the reflective plate 342L on the left side is rotated so as to not prevent incidence of light to the optical fiber 343 of the light reflected with the reflective plate 342R.

Thus, the light collected by the light collecting unit 311 is reflected to the left side with the reflective plate 342R, and is incident in the optical fiber 343.

In the case that the other communication devices such as the communication device 302 (Fig. 15) is in the light distributing mode, and the light collected by the other communication device thereof is provided to the daylighting unit 345 (Fig. 16) of the communication device 301 via the optical fiber 344 (Fig. 16), the light provided from the other communication device thereof is used with the daylighting unit 345, and image display and so forth is performed with the display unit 315, as described in Fig. 19 and Fig. 20.

C in Fig. 21 shows the state of the light distributing unit 332 in charging mode.

In charging mode, the reflective plate 342L on the left side of the reflective plates 342L and 342R making up the light distributing unit 332 is rotates so as to reflect the light collected by the light collecting unit 311 to the solar panel 341 side on the right side, while the reflective plate 342R on the right side is rotated so as to not prevent incidence of the light reflected with the reflective plate 342L to the solar panel 341.

Thus, the light collected with the light collecting unit 311 is reflected to the right side with the reflective plate 342L, and is incident in the solar panel 341.

The light thus provided from the light distributing unit 332 is used to perform power generating with the solar panel 341. The power obtained by the power generating with the solar panel 341 is stored in the electric storage unit 316, and further the power stored in the electric storage unit 316 is used to drive the backlighting unit 315 (Fig. 19, Fig. 20) and other electrical appliances.

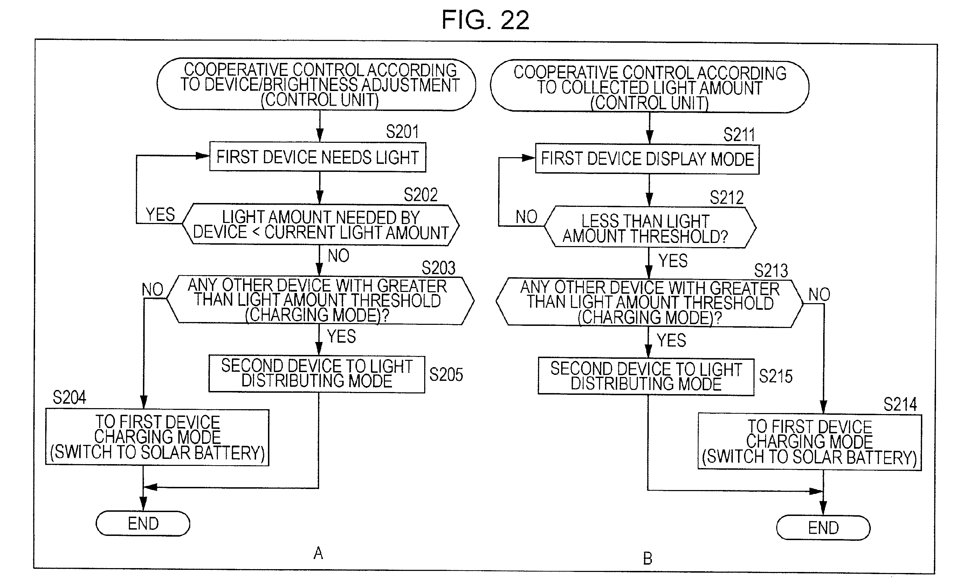

Next, the processing of the collaborative processing system in Fig. 15 will be described with reference to Fig. 22.

A in Fig. 22 is a flowchart describing processing of the control unit 331 performed (collaborative control) in a case of performing operations specifying for use of a device that uses light (hereafter also called an optical device) and a case of performing operations to adjust the brightness of illumination.

Note that hereafter, the communication device receiving provision of light from another communication device out of multiple communication devices including the communication devices 301 and 302 making up the collaborative system is called a first device, and a communication device that provides light to the first device is also called a second device.

Now, if the user performing operations to specify an optical device or perform operations to adjust the brightness of illuminations is the user of the guest room HA1, the communication device 301 (Fig. 15) installed in the guest room HA1 thereof is the first device.

With the communication device 301 which is the first device, the default operating mode of the light distributing unit 332 is the display mode (A in Fig. 21), for example.

With the other communication devices such as the communication device 302 that make up the collaborative processing system, the default operating mode of the light distributing unit is the display mode.

Note that control of the operating modes of the light distributing unit 332 of the communication device 301 and the light distributing unit of the other communication devices making the collaborative processing system is performed by the control unit 331.

When the user of the guest room HA1 performs operations to specify an optical device or operations to adjust the brightness of the illumination, for example, the communication device 301 installed in the guest room HA1 thereof is the first device, and the instructing unit 312 generates the instruction information according to the operation thereof.

That is to say, for example, in the case that the user of the guest room HA1 performs operations to specify an optical device such as the display unit 315 or the like that displays an image, the instructing unit 312 generates instruction information representing the instruction of the optical device thereof and the light request.

Also, for example, in the case that the user of the guest room HA1 performs operations to adjust the brightness of an illumination device, the instructing unit 312 generates instruction information representing the instruction of the brightness of the illumination after the adjustment thereof and the light request.

The instruction information generated with the instructing unit 312 is then transmitted from the transmission unit 313 to the control unit 331.

In step S201 the control unit 331 waits and receives the transmission of the instruction information representing the light request from the transmission unit 313 of the communication device 301 which is the first device, and the processing advances to step S202.

In step S202, based on the instruction information from the communication device 301 which is the first device, the control unit 331 determines the optical device and brightness instructed according to the instruction information, i.e. whether or not the light amount P1 necessary for the optical device or the brightness of the illumination after adjustment as specified by the user of the guest room HA1 is insufficient or not with the light amount P2 of the light collected with the light collecting unit 311 of the communication device 301 which is the first device.

The light amount P2 of the light collected with the light collecting unit 311 of the communication device 301 which is the first device is detected by the light amount detecting unit 317, included in the instruction information, and transmitted to the control unit 331 on a regular basis or irregular basis, or according to requests from the control unit 331. The other communication devices are also similar.

In the case determination is made in step S202 that the light amount P1 necessary for the optical device or the brightness instructed according to the instruction information from the communication device 301 which is the first device is sufficient with only the light amount P2 of light collected by the light collecting unit 311 (in the case that Expression P1 < P2 holds), the processing returns to step S201.

Accordingly, in the case that the light amount necessary for the optical device specified by the user of the guest room HA1 or the brightness of the illumination after adjustment can be provided with only the light collected by the light collecting unit 311 of the communication device 301 installed in the guest room HA1 thereof, the operating mode of the light distributing unit 332 of the communication device 301 which is the first device remains in display mode, and the operating mode of the light distributing units of the other communication devices such as the communication device 302 or the like are not changed, based on the communication device 301 which is the first device.

The light distributing unit 332 of the display mode provides the light collected by the light collecting unit 311 to the daylighting unit 345, as described in A of Fig. 21.

For example, in the case that the user of the guest room HA1 performs operations to specify the display unit 315 as the optical device, as described in A of Fig. 21 the light collected by the light collecting unit 311 which is provided from the light distributing unit 332 is received by the daylighting unit 345, and the image is displayed on the display unit 315 in image mode with the light thereof as the backlighting.

Also, for example, in the case that the user of the guest room HA1 performs operations to adjust the brightness of the illumination, as described in A of Fig. 21 the light collected by the light collecting unit 311 which is provided from the light distributing unit 332 is received by the daylighting unit 345, and the light amount of the light incident in the room interior of the guest room HA1 is adjusted on the display unit 315 in illumination mode.

On the other hand, in the case determination is made in step S202 that the light amount of the light collected by the light collecting unit 311 is insufficient light as the light amount necessary for the optical device and brightness instructed according to the instruction information from the communication device 301 which is the first device (in the case Expression P1 < P2 does not hold), the processing advances to step S203, the control unit 331 determines whether or not a communication device exists that collects light in a light amount at or greater than a predetermined light amount threshold and that is in charging mode, out of the other communication devices making up the collaborative processing system, besides the communication device 301 which is the first device.

Now, as described above, control of the operating mode of the light distributing unit 332 of the communication device 301 and of the light distributing unit of the other communication devices making up the collaborative processing system is performed by the control unit 331, whereby control unit 331 recognizes the operating modes of all of the light distributing units of the communication devices making up the collaborative processing system.

Also, with the communication device 301, as described above, the light amount detecting unit 317 detects the light amount of light that is collected by the light collecting unit 311, the instructing unit 312 includes the light amount thereof in the instruction information, and transmits this to the control unit 331 via the transmission unit 313, on a regular basis or irregular basis, or according to the requests of the control unit 331.

With the other communication devices making up the collaborative processing system also, similarly, the instruction information including the light amount of the light collected by (the light collecting unit of) the other communication device is transmitted to the control unit 331.

The control unit 331 recognizes whether or not the light amount of the light collected by each communication device is a light amount at or above a predetermined light amount threshold, based on the light amount included in the instruction information transmitted from each communication device making up the collaborative processing system.

Based on the recognition result of the operating mode of the light distributing unit of each communication device making up the collaborative processing system and the recognition results as to whether or not the light amount of the light collected by each communication device is a light amount at or greater than a predetermined light amount threshold, the control unit 331 determines in step S203 whether or not a communication device exists that collects light in a light amount at or greater than a predetermined light amount threshold and that is in charging mode, out of the other communication devices making up the collaborative processing system, besides the communication device 301 which is the first device.

Note that the predetermined light amount threshold used to determination in step S203 is an optical device or brightness instructed according to the instruction information from the communication device 301 which is the first device, for example, i.e. a value at or above the light amount P1 necessary for the optical device and the brightness of illumination after adjusting which the user of the guest room HA1 has specified.

In the case determination is made in step S203 that a communication device does not exist which collects light in a light amount at or greater than a predetermined light amount threshold and that is in charging mode, out of the other communication devices making up the collaborative processing system, besides the communication device 301 which is the first device, i.e. in the case that a communication device which can be a second device which provides light in a sufficient light amount does not exist among the other communication devices, the processing advances to step S204, and the control unit 331 controls the light distributing unit 332 of the communication device 301 which is the first device, the sets the operating mode of the light distributing unit 332 thereof to charging mode.

At the communication device 301, the light distributing unit 332 in charging mode provides the light collected by the light collecting unit 311 to the solar panel 341, as described in C of Fig. 21, and the solar panel 341 uses the light thereof to store power in the electric storage unit 316.

Further, with the communication device 301, the backlighting unit 351 (Fig. 19, Fig. 20) is driven by the power stored in the electric storage unit 316.

Accordingly, in the case that the user of the guest room HA1 performs operations to specify the display unit 315 as the optical device, for example, an image is displayed on the display unit 315 in image mode with the light emitted by the backlighting unit 351 which is driven by the power stored in the electric storage unit 316 as the backlighting.

Also, in the case that the user of the guest room HA1 has performed operations to adjust the brightness of the illuminations, the light amount that is incident in the room interior of the guest room HA1 of the light emitted by the backlighting unit 351 driven by the power stored in the electric storage unit 316 is adjusted with the display unit 315 in illumination mode.

On the other hand, in the case determination is made in step S203 that a communication device exists that collects light in a light amount at or greater than a predetermined light amount threshold and that is in charging mode, out of the other communication devices making up the collaborative processing system, besides the communication device 301 which is the first device, i.e. in the case a communication device exists that can be a second device which can provide light in a sufficient light amount to another communication device (hereafter also called a capable communication device, as appropriate), the processing advances to step S205, and the control unit 331 selects a communication device serving as the second device from among the capable communication devices.

Now, the control unit 331 uses the instruction information including instruction for the optical device or instruction for brightness of illumination or the like that is transmitted from the communication device 301 which is the first device, to select a communication device from the capable communication devices, to be the second device, as described above.

Accordingly, according to the instruction information, the (light collected by the light collecting unit of the) second device is said to have been indirectly instructed.

After selecting the second device, in step S205 the control unit 331 controls the second device thereof and goes to the light distributing mode.

That is to say, for example, if the communication device 302 is selected as the second device now, the control unit 331 controls the light distribution unit 333 of the of the communication device 302 which is the second device, whereby the operating mode of the light distributing unit 333 thereof goes to the light distribution mode, provides (distributes) the light collected by the light collecting unit 321 to the communication device 301 which is the first device.

In this case, with the communication device 302 which is the second device, the operating mode of the light distributing unit 333 goes to the light distributing mode, and as described in B of Fig. 21, the light collected by the light collecting unit 321 is distributed to the daylighting unit 345 (Fig. 16) of the communication device 301 which is the first device, via the optical fiber 344 (Fig. 16).

In the case that the user of the guest room HA1 performs operations to instruct the display unit 315 as the optical device, for example, with the daylighting unit 345, the light collected by the light collecting unit 321 of the communication device 302 which is distributed from the light distributing unit 333 of the communication device 302 which is the second device is received by the light receiving unit 314 (Fig. 16, Fig. 19, Fig. 20), and an image is displayed on the display unit 315 in image mode using the light thereof as backlighting.

Also, for example, in the case that the user of the guest room HA1 performs operations to adjust the brightness of the illumination, with the daylighting unit 345, the light collected by the light collecting unit 321 of the communication device 302 thereof which is distributed from the light distributing unit 333 of the communication device 302 which is the second device is received by the light receiving unit 314 (Fig. 16, Fig. 19, Fig. 20), and the light amount of the light thereof incident in the room interior of the guest room HA1 is adjusted with the display unit 315 in illumination mode.

As described above, in the case that the instructing unit 312 instructs an optical device or brightness according to user operations at the communication device 301 which is the first device, i.e. in the case of generating instruction information to instruct an optical device or brightness, the control unit 331 determines whether or not the light amount necessary for the optical device or brightness instructed according to the instruction information thereof is insufficient as the light amount of the light collected by the light collecting unit 311 of the communication device 301 which is the first device.

In the case that the light amount necessary for the optical device or the brightness instructed according to the instruction information is insufficient as the light amount of the light collected by the light collecting unit 311 of the communication device 301 which is the first device, the control unit 331 controls the light distributing unit 333 of the communication device 302, for example, which is the second device, thereby providing the light collected by the light collecting unit 321 of the communication device 302 thereof to the communication device 301 which is the first device, where the operating mode thereof is the light distributing mode.

The light collected by the light collecting unit 321 which is provided according to control by the control unit 331, which controls the provision of light collected by the light collecting unit 321 of the second device (other communication device), is received at the communication device 301 which is the first device, and is used as light to illuminate the liquid crystal cells 151 and 152 making up the display unit 315, whereby image display and adjustments to the brightness (illumination) of the room interior of the guest room HA1 are performed.

Note that in step S205, after causing the operating mode of the light distributing unit 332 of the communication device 301 which is the first device to be in charging mode, the control unit 331 determines whether or not the light amount P1 necessary for the optical device or the brightness of the illumination after adjustment specified by the user of the guest room HA1 is insufficient as the light amount P2 included in the instruction information from the instructing unit 312, i.e. as the light amount P2 of the light collected by the light collecting unit 311 of the communication device 301 which is the first device, similar to step S202, each time the instruction information from the instructing unit 312 including the light amount P2 collected by the light collecting unit 311 is transmitted from the instruction unit 312 via the transmission unit 313.

In the case that the light amount P1 necessary for the optical device or the brightness of the illumination after adjustment specified by the user of the guest room HA1 has is sufficient with the light amount P2 included in the instruction information from the instructing unit 312, the control unit 331 controls the light distributing unit 332 of the communication device 301 which is the first device, and causes the operating mode thereof to be in display mode.

The light distributing unit 332 in display mode provides the light collected by the light collecting unit 311 to the daylighting unit 345, as described in A of Fig. 21.

In the case that the user of the guest room HA1 performs operations to instruct the display unit 315 to be an optical device as described in A of Fig. 21 for example, with the daylighting unit 345, the light collected by the light collecting unit 311 provided from the light distributing unit 332 is received by the light receiving unit 314 (Fig. 15, Fig. 19, Fig. 20), and an image is displayed on the display unit 315 in image mode, with the light thereof as backlighting.

Also, for example, in the case the user of the guest room HA1 performs operations to adjust the brightness of the illumination, as described in A of Fig. 21, with the daylighting unit 345, the light collected by the light collecting unit 311 provided from the light distributing unit 332 is received by the light receiving unit 314 (Fig. 15, Fig. 19, Fig. 20), and the light amount of the light thereof incident in the room interior of the guest room HA1 is adjusted by the display unit 315 in illumination mode.

Accordingly, the control unit 331 causes the operating mode of the light distributing unit 332 of the communication device 301 which is the first device to be in display mode (A in Fig. 21), and causes the light distributing unit 332 of the communication device 301 which is the first device to distribute the light collected by the light collecting unit 311 of the communication device 301 to the light receiving unit 314 (Fig. 15, Fig. 19, Fig. 20) of the daylighting unit 345 of the same communication device 301.

That is to say, the light distributing unit 332 of the communication device 301 which is the first device goes to the display mode (A in Fig. 21) according to the instruction information generated by the instructing unit 312 of the communication device 301 thereof, and the light collected by the light collecting unit 311 of the communication device 301 thereof is distributed to the light receiving unit 314 (Fig. 15, Fig. 19, Fig. 20) of the daylighting unit 345 of the communication device 301 thereof.

Note that similarly, the light distributing unit 332 of the communication device 301 which is the first device goes to the charging mode (C in Fig. 21) according to the instruction information generated by the instructing unit 312 of the communication device 301, as described in step S204, and distributes the light collected by the light collecting unit 311 of the communication device 301 thereof to the solar panel 341 (Fig. 16) of the communication device 301.

On the other hand, according to the instruction information from the instructing unit 312 of the communication device 301 which is the first device, the control unit 331 causes the operating mode of the light distributing unit 333 of the communication device 302 which is the second device to be in light distributing mode (B in Fig. 21), and the light collected by the light collecting unit 321 of the communication device 302 thereof is distributed by the light distributing unit 333 of the communication device 302 to the light receiving unit 314 (Fig. 15, Fig. 19, Fig. 20) of the daylighting unit 345 of the communication device 301 which is another communication device.

That is to say, the light distributing unit 333 of the communication device 302 which is the second device goes to the light distributing mode (B in Fig. 21) according to the instruction information generated by the instructing unit 312 of the communication device 301 which is another communication device from the communication device 302 thereof, and the light collected by the light collecting unit 321 of the communication device 302 which is the second device is distributed to the light receiving unit 314 (Fig. 15, Fig. 19, Fig. 20) of the daylighting unit 345 of the communication device 301 which is another communication device.

Next, B in Fig. 22 is a flowchart describing the processing of the control unit 331 (collaborative control) performed according to the light amount of the light collected by collecting units of various communication devices making up the collaborative processing system in Fig. 15, including the light collecting unit 311 of the communication device 301.

Note that the processing of B in Fig. 22 is performed with the various communication devices making up the collaborative processing system as the first device, but here the communication device 301 is the first device, for example.

In step S211, the control unit 331 controls the light distributing unit 332 of the communication device 301 (Fig. 15, Fig. 16) which is the first device, whereby the processing advances to step S212, with the operating mode thereof in the default display mode (A in Fig. 21).

In step S212 the control unit 331 determines whether or not the light amount of the light collected by the light collecting unit 311 of the communication device 301 which is the first device is less than a predetermined light amount threshold.

That is to say, as described in A of Fig. 22, the light amount P2 of the light collected by the light collecting unit 311 of the communication device 301 which is the first device is detected by the light amount detecting unit 317, included in the instruction information by the instructing unit 312, and transmitted from (the transmission unit 313 of) the communication device 301 which is the first device to the control unit 331 regularly or irregularly, or according request by the control unit 331.

In step S212, determination is made as to whether or not the light amount of the light collected by the light collecting unit 311 of the communication unit 301 which is the first device is less than a predetermined light amount threshold, using the instruction information including the light amount P2 of the light collected by the light collecting unit 311 transmitted to the control unit 331 from the communication device 301 which is the first device.

Note that the predetermined light amount threshold used in the determination in step S212 and the later-described step S213 is the minimum light amount as the light amount of the light for which use in the guest room HA1 is predicted, i.e. the light amount of the light to illuminate the display unit 315 in image mode or illumination mode, for example.

In the case determination is made in step S212 that the light amount of the light collected by the light collecting unit 311 of the communication device 301 which is the first device is not less than a predetermined light amount threshold, i.e., for example in the case that a sufficient light amount is collected by the light collecting unit 311 as the light amount of the light to illuminate the display unit 315 in imaging mode or illuminating mode, the processing returns to step S211.

As described above, in the case that the light amount of the light collected by the light collecting unit 311 of the communication device 301 which is the first device is not less than a predetermined light amount threshold, the operating mode of the light distributing unit 332 of the communication device 301 which is the first device remains in display mode. Also, based on the communication device 301 which is the first device, the operating mode of the light distributing unit of the other communication devices such as the communication device 302 is not changed.

Accordingly, the light distributing unit 332 in display mode provides the light collected by the light collecting unit 311 to the daylighting unit 345, as described in A of Fig. 21.

With the daylighting unit 345, the light collected by the light collecting unit 311 which is provided from the light distributing unit 332 is received by the light receiving unit 314 (Fig. 15, Fig. 19, Fig. 20), an image displayed on the display unit 315 in image mode with the light thereof as backlighting, or the light amount of the incident in the room interior of the guest room HA1 is adjusted with the display unit 315 in illumination mode.

On the other hand, in the case determination is made in step S212 that the light amount of the light collected by the light collecting unit 311 of the communication device 301 which is the first device is not less than a predetermined light amount threshold, i.e. for example in the case that sufficient light amount has not been able to be collected by the light collecting unit 311 as the light amount of the light to illuminate the display unit 315 in image mode or illumination mode, the processing advances to step S213.

Now, in step S212, determination is made that the light amount of the light collected by the light collecting unit 311 is less than the predetermined light amount threshold, using the instruction information including the light amount P2 of the light collected by the light collecting unit 311 which is generated by the instructing unit 312 and transmitted from the transmission unit 313 to the control unit 331, as described above.

Accordingly, the instructing unit 312 can be said to instruct that the light amount detected by the light amount detecting unit 317 is less than the predetermined light amount threshold, or is not less than the predetermined light amount threshold, and further, the transmission unit 313 can be said to transmit instruction information corresponding to the instruction of the instructing unit 312.

In step S213, the control unit 331 determines whether or not a communication device exists that collects light in a light amount at or greater than a predetermined light amount threshold and that is in charging mode, out of the other communication devices making up the collaborative processing system, besides the communication device 301 which is the first device, similar to the case in step S203 in A of Fig. 22.

In the case determination is made in step S213 that a communication device does not exist that collects light in a light amount at or greater than a predetermined light amount threshold and that is in charging mode, out of the other communication devices making up the collaborative processing system, besides the communication device 301 which is the first device, i.e. in the case that a capable communication device which is a communication device that can be a second device which can provide light in a sufficient light amount exists within the other communication devices, the processing advances to step S214, the control unit 331 controls the light distributing unit 332 of the communication device 301 which is the first device, and causes the operating mode of the light distributing unit 332 to be in charging mode.

With the communication device 301, the light distributing unit 332 in charging mode provides the light collected by the light collecting unit 311 to the solar panel 341, as described in C in Fig. 21, and the solar panel 341 uses the light thereof to charging the power in the electric storage unit 316.

Further, with the communication device 301, the backlighting unit 351 (Fig. 19, Fig. 20) is driven by the power stored in the electric storage unit 316.

Subsequently, an image is displayed on the display unit 315 in image mode, with the light emitted by the backlighting unit 351 driven by the power stored in the electric storage unit 316 as backlighting, or the light amount of the light emitted by the backlighting unit 351 incident in the room interior of the guest room HA1 is adjusted with the display unit 315 in illumination mode.

On the other hand, in the case determination is made in step S213 that a communication device exists that collects light in a light amount at or greater than a predetermined light amount threshold and that is in charging mode, out of the other communication devices making up the collaborative processing system, besides the communication device 301 which is the first device, i.e. in the case that a capable communication device which is a communication device that can be a second device which can provide light in a sufficient light amount exists within the other communication devices, the processing advances to step S215, and the control unit 331 selects the communication device to be the second device from the capable communication device, similar to the case in step S205 in A of Fig. 22.

Further, in step S215 the control unit 331 controls the second device so as to be in light distributing mode.

That is to say, if the communication device 302 is selected now as the second device, for example, the control unit 331 controls the light distributing unit 333 of the communication device 302 which is the second device, thereby setting the operating mode of the light distributing unit 333 to the light distributing mode, and (distributes) provides the light collected by the light collecting unit 321 to the communication device 301 which is the first device.

In this case, with the communication device 302 which is the second device, the operating mode of the light distributing unit 333 goes to the light distributing mode, and as described in B of Fig. 21, the light collected by the light collecting unit 321 is distributed to the daylighting unit 345 (Fig. 16) of the communication device 301 which is the first device, via the optic fiber 344 (Fig. 16).

Subsequently, with the daylighting unit 345, the light collected by the light collecting unit 321 of the communication device 302 which is distributed from the light distributing unit 333 of the communication device 302 which is the second device is received at the light receiving unit 314 (Fig. 16, Fig. 19, Fig. 20), and an image is displayed on the display unit 315 in the image mode with that light as backlighting, or the light amount of the light thereof incident in the room interior of the guest room HA1 is adjusted with the display unit 315 in illumination mode.

As described above, with the communication device 301 which is the first device, the instructing unit 312 instructs that the light amount detected by the light amount detecting unit 317 is less than a predetermined light amount threshold, and the transmission unit 313 transmits the instruction information corresponding to the instruction of the instructing unit 312 thereof to the control unit 331.
On the other hand, the control unit 331 determines whether or not the light amount of the light collected by the light collecting unit 311 of the communication device 301 is a sufficient light amount, based on the instruction information from the communication device 301.

Further, in the case that the light amount of the light collected with the light collecting unit 311 is not a sufficient light amount, the control unit 331 controls the light distributing unit 333 of the communication device 302, for example, which is the second device, whereby the operating mode thereof goes to the light distributing mode, and the light collected by the light collecting unit 321 of the communication device 302 thereof is provided to the communication device 301 which is the first device.

Subsequently, with the communication device 301 which is the first device, the light collected by the light collecting unit 321 which is provided according to control by the control unit 331 which controls the provision of light collected by the light collecting unit 321 of the second device (other communication device) is received, and is used as light to illuminate the liquid crystal cells 151 and 152 that make up the display unit 315, whereby image displays and adjustments to the room interior brightness (illumination) of the guest room HA1 are performed.

Note that after the processing in step S215, processing similar to the processing following the step S205 in A of Fig. 22 is performed.

Now, in the case described above, for example, with the communication device 301, the light amount detecting unit 317 detects the light amount of the light collected by the light collecting unit 311, the instructing unit 312 includes the light amount thereof in the instruction information via the transmission unit 313 and transmits to the control unit 331, while the control unit 331 determines whether or not the light amount included in the instruction information from the communication device 301 is at or greater than a predetermined light amount threshold, but besides this, with the communication device 301, the instructing unit 312 can determine whether or not the light amount detected by the light amount detecting unit 317 is at or greater than a predetermined light amount threshold, include the determination results thereof in the instruction information, and send to the control unit 331. The similar is the case for other communication devices making up the collaborative processing system.

Also, in the case that the operating mode of the light distributing unit 333 of the communication device 302 which is the second device is caused to be in light distributing mode, and the light collected by the light collecting unit 321 of the communication device 302 thereof is distributed to the daylighting unit 345 of the communication device 301 which is the first device, with the communication device 301 which is the first device, the light distributed from the communication device 302 which is the second device as well as the light that is collected by the light collecting unit 311 of the communication device 301 which is the first device and distributed (provided) to the daylighting unit 345 via the light distributing unit 332 can be used as light to illuminate the display unit 315.

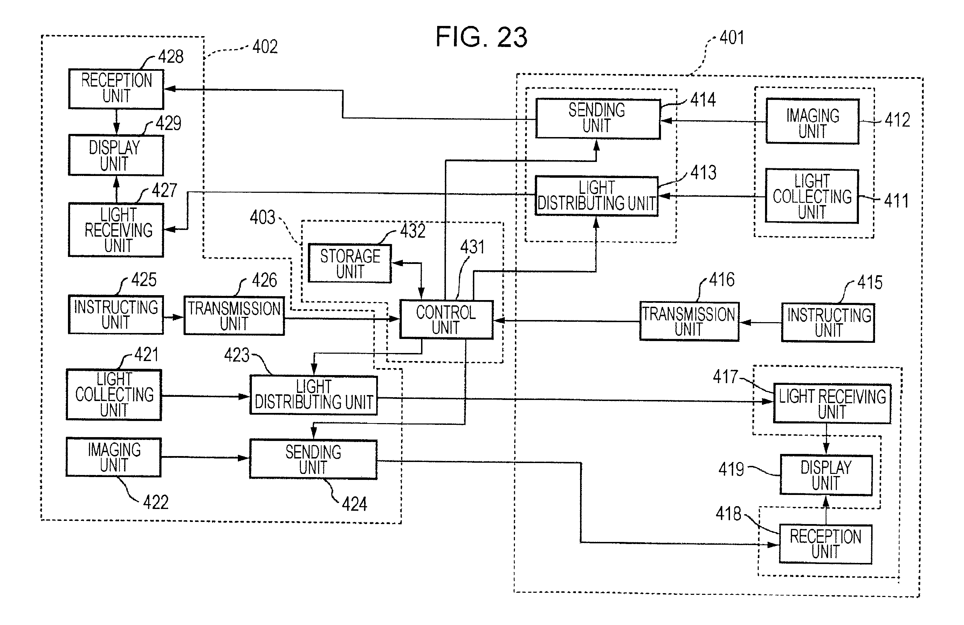

Next, Fig. 23 shows a fifth configuration example of the collaborative processing system applied to the community in Fig. 4.

In Fig. 23, the collaborative processing system is made up of multiple communication devices 401 and 402 and a control device 403.

The communication device 401 is installed in the guest room HA1 (Fig. 4) of the hotel HA, and the communication device 402 is installed in the guest room HB1 of the hotel HB, for example, which is one of the other guest rooms other than the guest room HA1.

Note that communication devices similar to the communication devices 401 and 402 are installed also in the guest rooms of the hotel HA other than the guest room HA1, the guest rooms of the hotel HB other than the guest room HB1, each of the guest rooms in hotel HC, and each of the guest rooms in hotel HD, but the description thereof will be omitted.

Also, the control device 403 can be installed in a control center independent from the hotels HA through HD, and for example, can also be installed in the hotels HA or HB as an integrated unit with the communication devices 401 or 402.

Further, the functions of the control device 403 can be divided and handled by the communication devices 401 and 402 as well as other communication devices making up the collaborative processing system.

The communication device 401 is made up of a light collecting unit 411, imaging unit 412, light distributing unit 413, sending unit 414, instructing unit 415, transmission unit 416, light receiving unit 417, reception unit 418, and display unit 419.

The light collecting unit 411 and imaging unit 412 act as the sensor unit 31 in Fig. 2.

The light collecting unit 411 collects the sunlight (senses the light) and inserts (supplies) into the light distributing unit 413.

The imaging unit 412 images the image (senses the light), and outputs the image signal. The image signal output by the imaging unit 412 is supplied to the sending unit 414.

The light distributing unit 413 and the sending unit 414 act as the sending unit 52 in Fig. 2.

According to the control by the control unit 431, the light distributing unit 413 performs light distributing to provide the light collected by the light collecting unit 411 of the communication device 401 to communication devices other than the communication device 401 (e.g. the communication device 402 and other communication devices making up the collaborative processing system) and so forth.

The sending unit 414 provides (transmits) the image signals serving as the sensor output of the imaging unit 412 of the communication device 401 to communication devices other than the communication device 401, according to the control by the control unit 431.

The instructing unit 415 equates to the instructing unit 32 in Fig. 2. The instructing unit 415 performs predetermined instruction according to the user operations, for example. That is to say, the instructing unit 415 generates instruction information to perform predetermined instruction of the image signals output by the imaging unit of the other communication devices or the like, such as the imaging unit 422 of the communication device 402, for example, according to user operations or the like, and supplies this to the transmission unit 416.

The transmission unit 416 acts as the transmission unit 33 in Fig. 2. The transmission unit 416 transmits the instruction information from the instructing unit 415 to the control unit 431.

The light receiving unit 417 and the reception unit 418 act as the receiving unit 34 in Fig. 2.

The light receiving unit 417 receives the sensor output instructed according to the instruction information transmitted to the control unit 431, i.e. for example the light output by the light collecting unit 421 which the other communication device 402 has, from the light distributing unit 423 that provides the light thereof, and supplies this to the display unit 419.

The reception unit 418 receives the image signal output by the imaging unit of the other communication device, i.e. for example the image signal that is output by the imaging unit 422 of the communication device 402 and that is transmitted via the sending unit 424, and supplies this to the display unit 419.

The display unit 419 uses the light from the light receiving unit 417 to display the image corresponding to the image signal from the light receiving unit 418, and also illuminates the room interior of the guest room HA1. Note that the display unit 419 can also display an image corresponding to the image signal output by an unshown tuner or player or the like.

The communication device 402 is made up similar to the communication device 401.

That is to say, the communication device 402 is made up of a light collecting unit 421, imaging unit 422, light distributing unit 423, sending unit 424, instructing unit 425, transmission unit 426, light receiving unit 427, reception unit 428, and display unit 429, similar respectively to the light collecting unit 411, imaging unit 412, light distributing unit 413, sending unit 414, instructing unit 415, transmission unit 416, light receiving unit 417, reception unit 418, and display unit 419.

Note that as to the light receiving unit 427 of the communication device 402, the light collected by the light collecting unit 411 of the communication device 401 out of the light provided by the light distributing unit of the other communication device is provided (distributed) from the light distributing unit 413.

Also, as to the reception unit 428 of the communication device 402, the image signal output by the imaging unit 412 of the communication device 401 out of the image signals output by the imaging unit of the other communication device is provided (transmitted) from the sending unit 414.

The control device 403 is made up of a control unit 431 and a storage unit 432.

The control unit 431 acts as the control unit 51 in Fig. 2. The control unit 431 controls the provision of light and image signals serving as sensor output by the light distributing unit 413 and sending unit 414, the light distributing unit 423 and sending unit 424, and the light distributing units and sending units of other communication devices, according to the instruction information transmitted from the transmission unit 416 of the communication device 401, the instruction information transmitted from the transmission unit 426 of the communication device 402 and the like, and further, the information stored in the storage unit 432.

The storage unit 432 stores information necessary for the control unit 431 to perform processing.

Note that with the collaborative processing system in Fig. 23, the light collecting unit 411 is made up similar to the light collecting unit 311 described in Fig. 15 through Fig. 18. The light collecting unit 421 is also similar.

Also, the imaging unit 412 is installed in a position that an image of the scenery that can be seen from (the room interior of the guest room HA1 of) the hotel HA can be imaged, similar to the imaging unit 111 described in Fig. 5 and Fig. 8. Similarly, the imaging unit 422 is also installed in a position that an image of the scenery that can be seen from the hotel HB can be imaged.

Further, the light distributing unit 413 is configured similar to the light distributing unit 332 described in Fig. 15, Fig. 16, and Fig. 21. The light distributing unit 423 is also similar.

Also, with the communication device 401, the light receiving unit 417 is made up similar to the light receiving unit 314 described in Fig. 15, Fig. 19, and Fig. 20. Also, the display unit 419 is made up similar to the display unit 315 described in Fig. 15, Fig. 16, Fig. 19, and Fig. 20, and accordingly, is made up of the liquid crystal display devices described in Fig. 6 and Fig. 7.

Note that although not shown in the diagram, in Fig. 23 the communication device 401 has a daylighting unit similar to the daylighting unit 345 described in Fig. 16, Fig. 19, and Fig. 20, and a light receiving unit 417 and display unit 419 make up the daylighting unit provided to the communication device 401 similar to the light receiving unit 314 and display unit 315 that make up the daylighting unit 345 (Fig. 16, Fig. 19, Fig. 20).

The communication device 402 is also similar.

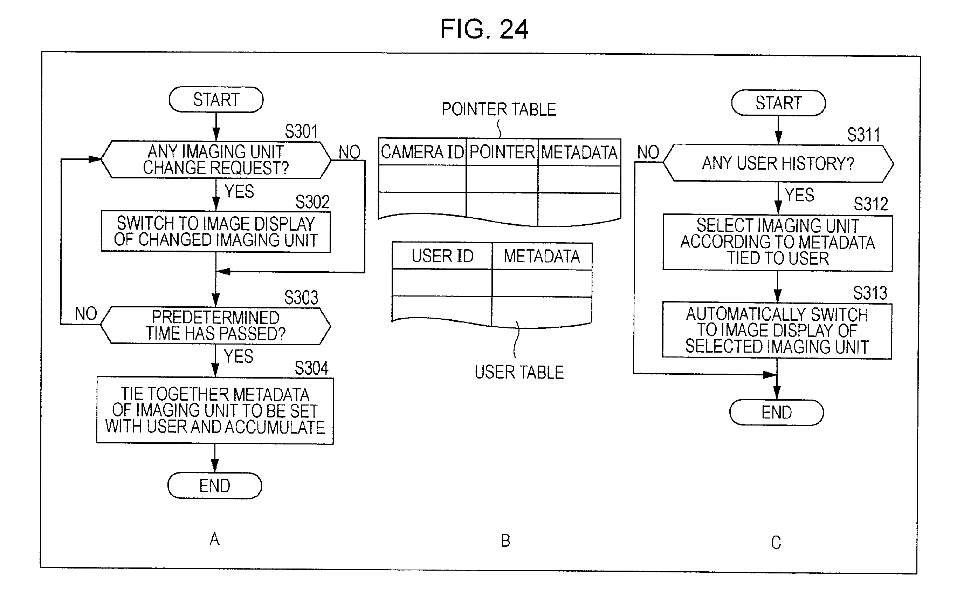

Next, processing that is performed related to images in the collaborative processing system in Fig. 23 will be described with reference to Fig. 24.

A of Fig. 24 is a flowchart describing one of the processes performed related to images performed by the control unit 431 in Fig. 23.

For example, with the communication device 401, the imaging unit 412 images an image, and the image signal obtained as a result thereof is output to the sending unit 414.

Now, the sending unit 414 receives the image signals from the imaging unit 412, and temporarily stores them in an internal memory (unshown) as needed. Further, the sending unit 414 transmits the image signals from the imaging unit 412 (including the image signals stored in the internal memory) to the other communication devices such as the communication device 402 or the like, according to the control by the control unit 431.

The other communication devices making up the collaborative processing system, including the communication device 402, images an image and transmits the image signals obtained as a result thereof according to the control by the control unit 431, similar to the communication device 401.

For example, if the sending unit 424 of the communication device 402 is transmitting the image signals of the image that is imaged with the imaging unit 422 now to the communication device 401 according to the control by the control unit 431, with the communication device 401, the reception unit 418 receives the image signals transmitted (provided) from the sending unit 424 of the communication device 402, and supplies this to the display unit 419.

The image corresponding to the image signals from the reception unit 418 is displayed on the display unit 419.

On the other hand, in step S301 the control unit 431 determines whether or not there has been an instruction (request) to change the (imaging unit imaging the) image displayed on the display unit 419 of the communication device 401.

That is to say, in the case that the user of the guest room HA1 performs operations to change the image displayed on the display unit 419 from the current image (e.g. the image of scenery seen from the hotel HB) to another image (e.g. an image of scenery seen from the hotel HC), with the communication device 401 the instructing unit 415 generates instruction information to instruct the image after changing, according to operations by the user of the guest room HA1, includes the user ID of the user of the guest room HA1 in the instruction information thereof, and supplies this to the transmission unit 416.

The transmission unit 416 transmits the instruction information from the instructing unit 415 to the control unit 431.

In step S301, determination is made as to whether the instruction information to instruct the image after change has been transmitted from the transmission unit 416 to the control unit 431 as described above.

In the case determination is made in step S301 that the instruction information to instruct the image after change has not been transmitted, i.e. for example in the case that the user of the guest room HA1 desires to continue displaying the image currently displayed on the display unit 419, the processing skips step S302 and advances to step S303.

Also, in the case determination is made in step S301 that the instruction information to instruct the image after change has not been transmitted from the transmission unit 416 to the control unit 431, the processing advances to step S302, the control unit 431 performs control to switch (change) the image displayed on the display unit 419 of the communication device 401 from the image imaged with the imaging unit 422 which is the current image to an image instructed by the instruction information thereof, and the processing advances to step S303.

That is to say, in step S302, the control unit 431 stops the transmission of the image signals output by the imaging unit 422 to the communication device 401 by controlling the sending unit 424 of the communication device 402.

Further, the control unit 431 starts the transmission of the image signals output by the imaging unit to the communication device 401 by controlling the sending unit of the communication device having an imaging unit which images the image instructed by the instruction information from the transmission unit 416 of the communication device 401 (hereafter also called instructed device).

With the communication device 401, the reception unit 418 receives the image signals output by the imaging unit of the instructed device which is transmitted as described above, and supplies this to the display unit 419.

The image corresponding to the image signals from the reception unit 418, i.e. the image after change that is instructed by the instruction information, is displayed on the display unit 419.

In step S303, the control unit 431 determines whether or not a predetermined amount of time has passed from the start of the image display that is currently displayed on the display unit 419 of the communication device 401.

In the case determination is made in step S303 that a predetermined amount of time has not passed from the start of the image display that is currently displayed on the display unit 419, i.e. in the case there is a possibility for the user of the guest room HA1 to dislike the image currently displayed on the display unit 419 and perform operations to change to another image when not much time has passed from the start of the image display that is currently displayed on the display unit 419, the processing returns to step S301.

Also, in the case determination is made in step S303 that a predetermined amount of time has passed from the start of the image display that is currently displayed on the display unit 419, i.e. in the case that the user of the guest room HA1 likes the image currently displayed on the display unit 419, and continues to display the image thereof for a certain length of time, the processing advances to step S304, and the control unit 431 correlates (ties together) the user ID of the user of the guest room HA1 and the metadata of the image currently displayed on the display unit 419 according to the user operations thereof, and stores (accumulates) this in the storage unit 432.

That is to say, the control unit 432 correlates the metadata of the image currently displayed on the display unit 419 and the user ID of the user of the guest room HA1 included in the instruction information transmitted from the transmission unit 416 which instructs the image thereof, and registers this in a table stored in the storage unit 432.

The processing in A of Fig. 24 is performed for all of the communication devices making up the collaborative processing system besides the communication device 401.

B in Fig. 24 shows an example of the table stored in the storage unit 432.

In B of Fig. 24, two tables which are a pointer table and a user table are stored in the storage unit 432.

Camera IDs to identify the imaging units, such imaging units for each communication devices which make up the collaborative processing system, including the imaging unit 412 of the communication device 401 and the imaging unit 422 of the communication device 402, metadata of the images imaged by the imaging units, and pointers to access the image signals output by the imaging units thereof (that image the images) are correlated and registered in the pointer table.

Now, the metadata of the images registered in the pointer table can be used for information of objects (e.g. a building, river, bridge, ocean, mountain, the sun, and so forth) in the image thereof.

For example, the imaging unit 412 of the communication device 401 is installed beforehand in the hotel HA, whereby what sort of object will be in the image that is imaged with the imaging unit 412 thereof is recognized by the manager of the collaborative processing system. Thus, the metadata of the pointer table is registered in the pointer table by the manager of the collaborative processing system, for example.

Note that other information such as the date/time, season, and so forth that the image was imaged can be used as metadata of the image registered in the pointer table.

Also, information for accessing the memory (unshown) of the sending unit 414 which temporarily stores the image signals output by the imaging unit 412, for example, can be used as a pointer registered in the pointer table.

Note that the image signals output by the imaging unit 412 can be supplied from the sending unit 414 to the control unit 431, and temporarily stored in the memory that is internal to the control unit 431, and in this case, information for accessing the storage region that stores the image signals output by the imaging unit 412 of the memory internal to the control unit 431 can be used as a pointer registered in the pointer table. Also, information for accessing the imaging units, for example, can be used as pointers.

The user ID and the metadata of the image displayed on the display unit 419 according to the operations of the user of the user ID thereof are correlated and registered in the user table.

That is to say, in step S304 in A of Fig. 24 described above, the user ID of the user of the guest room HA1 and the metadata of the image displayed on the display unit 419 according to the operations of the user thereof, for example, are correlated and registered in the user table.

Note that the metadata of the image registered in the user table, i.e. the user ID of the user of the guest room HA1 and the metadata of the image displayed on the display unit 419 according to the operations of the user thereof, for example, is recognized in the pointer table for example, from the metadata correlated with the camera ID of the imaging unit that is imaging the image thereof.

Next, C in Fig. 24 is a flowchart describing one of other processes that the control unit 431 in Fig. 23 performs relating to the image.

The processing in C in Fig. 24 is performed using a pointer table and user table stored in the storage unit 432.

For example, with the communication device 401, the instructing unit 415 generates the instruction information that instructs the user ID of the user according to the operations of an employee of the hotel HA or operations of the user lodging in the guest room HA1, and supplies to the transmission unit 416.

The transmission unit 416 transmits the instruction information from the instructing unit 415 to the control unit 431, and the control unit 431 receives the instruction information that instructs the user ID which is transmitted from the transmission unit 416 as described above.

Upon receiving the instruction information that instructs the user ID, in step S311 the control unit 431 determines whether or not a history exists of the user of the user ID instructed by the instruction information thereof, i.e. whether the user ID instructed by the instruction information is registered in the user table stored in the storage unit 432.

In the case determination is made in step S311 that the user ID instructed by the instruction information is not registered in the user table stored in the storage unit 432, i.e. for example in the case that this is the first time for the user of the user ID instructed by the instruction information to lodge in the community in Fig. 4, the processing skips steps S312 and S313 and ends.

Also, in the case determination is made in step S311 that the user ID instructed by the instruction information is registered in the user table stored in the storage unit 432, the processing advances to step S312, and the control unit 431 selects the metadata correlated to the user ID instructed by the instruction information as metadata of interest in the user table.

Now, in the case that there are multiple pieces of metadata correlated to the user ID instructed by the instruction information in the user table, one piece of metadata is selected from the multiple pieces of metadata therein randomly, for example, as the metadata of interest.

After selection of the metadata of interest, the control unit 431 further selects the imaging unit that images the image having the (metadata that is the same as the) metadata of interest thereof in step S312 as the imaging unit (hereafter also called imaging unit of interest) that images the image shown to the user of the user ID instructed by the instruction information, i.e., in this case, the user of the guest room HA1, and the processing advances to step S313.

That is to say, the control unit 431 selects the pointer correlated to the metadata of interest in the pointer table as a pointer of interest.

Now, in the pointer table, in the case that multiple pointers exist that are correlated to the metadata of interest, one pointer is selected, randomly for example, as the pointer of interest from the multiple pointers therein.

In step S313, the control unit 431 controls the sending unit of the communication device having the imaging unit of interest so as to provide the image signals output by the imaging unit of interest selected in step S312 to the communication device 401.

That is to say, the control unit 431 accesses the sending unit with an internal memory shown by the pointer of interest (hereafter also called sending unit of interest), and controls the sending unit of interest so as to transmit the image signals output by the imaging unit (imaging unit of interest) provided by the sending unit of interest to the communication device 401.

With the communication device 401, the reception unit 418 receives the image signal output by the imaging unit of interest transmitted from the sending unit of interest as described above, supplies this to the display unit 419, and displays the corresponding image.

The processing in C in Fig. 24 is performed for all of the communication devices making up the collaborative processing system besides the communication device 401.

As described above, according to the processing described in A in Fig. 24, with the communication device 401 installed in the guest room HA1, for example, upon the instructing unit 415 instructing the image signals output by the imaging units of the other communication devices being instructed according to the operations of the user of the guest room HA1, the reception unit 418 receives the image signals output by the imaging units of the other communication devices instructed according to the instruction information corresponding to the instruction of the instructing unit 415, and the display unit 419 displays an image corresponding to the image signal received by the receiving unit 418.

Further, with the control unit 431, the user ID of the user of the guest room HA1 and the metadata of the image displayed on the display unit 419 are correlated and registered in the user table.

On the other hand, according to the processing described with C in Fig. 24, the control unit 431 selects an imaging unit (imaging unit of interest) that images the image having metadata (metadata of interest) that is correlated to the user ID of the user of the guest room HA1 which the instruction information instructs that is transmitted from the communication device 401 to the control unit 431 for example, as an identified user ID, using the pointer table and user table, and controls the provision of the image signals output by the imaging unit of interest thereof.

That is to say, the control unit 431 controls the sending unit (sending unit of interest) of the communication device having an imaging unit of interest, and transmits the image signal output by the imaging unit of interest to the communication device 401.

With the communication device 401, the reception unit 418 receives the image signal from the sending unit of interest, and displays the corresponding image on the display unit 419.

Accordingly, in the case that the user has previously lodged in one of the guest rooms of the hotels HA through HD, and for example has performed operations to instruct the display of an image including a predetermined object such as the ocean or the like, and liked and continuously displayed the image thereof, the next time the user lodges in one of the guest rooms of the hotels HA through HD, even without performing operations to instruct the display of the image including the favorite object, an image is displayed wherein the favorite object is included.

As a result, this provides the user with a feeling that the hotel side where the user has previously lodged, of the hotels HA through HD, remembers the user, and makes provisions matching the user preferences.

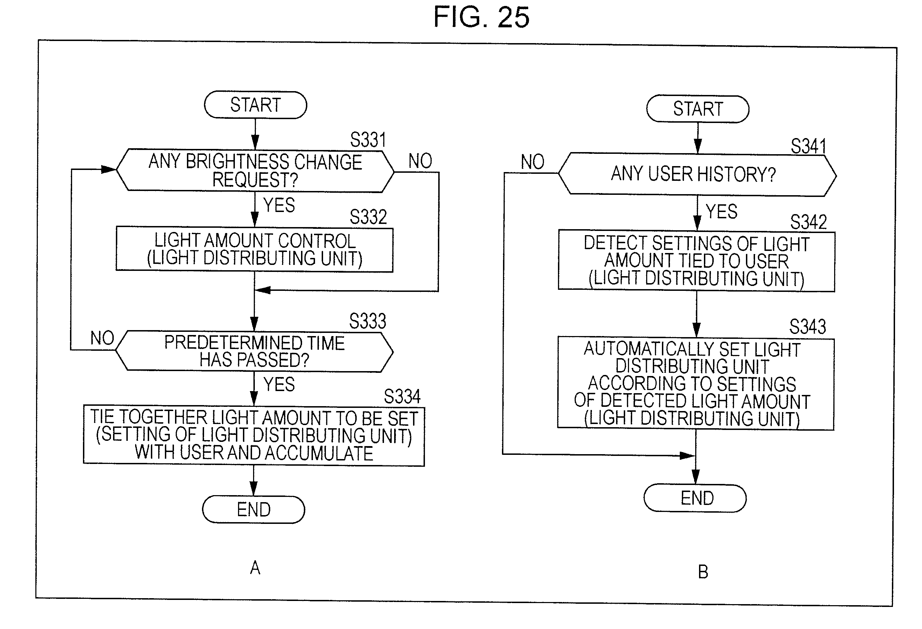

Next, processing performed relating to light with the collaborative processing system in Fig. 23 will be described with reference to Fig. 25.

A in Fig. 25 is a flowchart describing one of the processing relating to light that the control unit 431 in Fig. 23 performs.

For example, with the communication device 401, the light collecting unit 411 collects the sunlight, and emits the light obtained by such light collection to the light distributing unit 413.

Now, the light distributing unit 413 distributes (provides) the light from the light collecting unit 411 to the other communication devices such as the communication device 402 or the like, according to control by the control unit 431.

Even with the other communication devices making up the collaborative processing system including the communication device 402, similar to the communication device 401, the sunlight is collected, and the light obtained as a result thereof is distributed according to the control by the control unit 431.

Now for example, if the light distributing unit 423 with the communication device 402 is distributing the light collected by the light collecting unit 421 according to the control by the control unit 431 to the communication device 401, at the communication device 401 the light receiving unit 417 receives the light distributed from the light distributing unit 423 of the communication device 402, and supplies this to the display unit 419.

The light from the light receiving unit 417 is emitted as illumination of the guest room HA1 with the display unit 419.

On the other hand, the control unit 431 determines whether or not there has been any instruction (request) for change in the brightness of the illumination by the display unit 419 of the communication device 401 in step S331.

That is to say, in the case that the user of the guest room HA1 performs operations to change the brightness of the illumination by the display unit 419 to a brighter brightness or a darker brightness than the current brightness, with the communication device 401, the instruction unit 415 generates the instruction information to instruct the brightness after the change according to operations by the user of the guest room HA1, includes the user ID of the user of the guest room HA1 in the instruction information, and supplies this to the transmission unit 416.

The transmission unit 416 transmits the instruction information from the instructing unit 415 to the control unit 431.

In step S331, determination is made as to whether or not the instruction information instructing the brightness after the change has been transmitted from the transmission unit 416 to the control unit 431 as described above.

In the case determination is made in step S331 that the instruction information to instruct the brightness after the change has not been transmitted, i.e. for example in the case that the user of the guest room HA1 desires to continue the brightness of the illumination by the display unit 419 to be the current brightness, the processing skips step S332 and advances to step S333.

Also, in the case determination is made in step S331 that the instruction information to instruct the brightness after the change has been transmitted from the transmission unit 416 to the control unit 431, the processing advances to step S332, and the control unit 431 performs control to switch (change) the brightness of the illumination by the display unit 419 of the communication device 401 from the current brightness to a brightness instructed by the instruction information thereof, and the processing advances to step S333.

That is to say, in step S332, the control unit 431 controls the light distributing unit of one or more other communication devices which are necessary out of the communication devices excluding the communication device 401, thereby distributing the light collected by the light collecting unit of the one or more other communication devices thereof from the light distributing unit of the one or more other communication devices to the communication device 401, so that the brightness of the illumination by the display unit 419 of the communication device 401 becomes the brightness instructed by the instruction information from (the transmission unit 416 of) the communication device 401.

Now, the instruction information to instruct the brightness after changing which is transmitted from the communication unit 401 to the control unit 431 can be said to be indirectly instructing the light collected by the light collecting unit of the one or more other communication devices for obtaining the brightness after changing.

With the communication device 401, the light receiving unit 417 receives the light collected by the light collecting unit of the one or more other communication devices instructed by the instruction information which is distributed from the light distributing unit of the one or more other communication devices as describe above, and the display unit 419 illuminates the room interior of the guest room HA1 by the light thereof. That is to say, the display unit 419 illuminates the room interior of the guest room HA1 with the brightness instructed by the instruction information.

In step S333, the control unit 431 determines whether or not a predetermined amount of time has passed since the illumination has started at the current brightness by the display unit 419 of the communication device 401.

In the case determination is made in step S333 that a predetermined amount of time has not passed since the illumination started at the current brightness by the display unit 419, i.e. in the case there is a possibility for the user of the guest room HA1 to dislike the brightness of the current illumination and perform operations to change the brightness of the current illumination when not much time has passed from the start of the illumination at the current brightness by the display unit 419, the processing returns to step S331.

Also, in the case determination is made in step S333 that a predetermined amount of time has passed since the illumination started at the current brightness by the display unit 419, i.e. in the case that the user of the guest room HA1 likes the brightness of the current illumination, and continues to leave the brightness as is for a certain length of time, the processing advances to step S334, and the control unit 431 correlates (ties together) the user ID of the user of the guest room HA1 and the light amount information relating to the light amount necessary for obtaining the brightness of the illumination after changing according to the user operations thereof, and stores (accumulates) this in the storage unit 432.

Now, as described above, upon the user of the guest room HA1 performing operations to change the brightness of the illumination, the control unit 431 distributes the light collected by the light collecting unit of the one or more other communication devices to the communication device 401 from the light distributing unit of the one or more other communication devices other than the communication device 401, based on the instruction information to instruct the brightness after the change, and with the communication device 401, the light thus distributed is received by the light receiving unit 417.

That is to say, the light receiving unit 417 receives the light collected by the light collecting unit of the one or more other communication devices instructed indirectly by the instruction information generated according to the user operations changing the brightness of the illumination.

Subsequently, in step S334, the control unit 431 stores the table (hereafter also called light amount information table), wherein the user ID of the user of the guest room HA1 and the light amount information relating to the light amount of the light received by the light receiving unit 417 according to the user operations thereof are correlated, in the storage unit 432.

Note that information of the brightness after changes as instructed by the instruction information and the information (settings) or the like of the light distributing unit controlled based on the instruction information thereof can be used as the light amount information, for example.

Also, the processing in A of Fig. 25 is performed for all of the communication devices making up the collaborative processing system other than the communication device 401.

Next, B in Fig. 25 is a flowchart describing one of the other processes that the control unit 431 in Fig. 23 performs relating to light.

The processing in B in Fig. 25 is performed using the light amount information table stored in the storage unit 432 with the processing in A in Fig. 25.

For example, with the communication device 401, the instructing unit 415 generates the instruction information to instruct the user ID of the user according to operations by an employee of the hotel HA or operations by the user lodging in the guest room HA1, and supplies this to the transmission unit 416.

The transmission unit 416 transmits the instruction information from the instructing unit 415 to the control unit 431, and the control unit 431 receives the instruction information instructing the user ID that is transmitted from the transmission unit 416, as described above.

Upon receiving the instruction information that instructs the user ID, in step S341 the control unit 431 determines whether or not a history exists of the user of the user ID instructed by the instruction information thereof, i.e. whether or not the user ID instructed by the instruction information is registered in the light amount information table stored in the storage unit 432.

In the case determination is made in step S341 that the user ID instructed by the instruction information is not registered in the light amount information table stored in the storage unit 432, i.e. for example that the user of the user ID instructed by the instruction information is lodging in the community in Fig. 4 for the first time, the processing skips steps S342 and S343, and ends.

Also, in the case determination is made in step S341 that the user ID instructed by the instruction information is registered in the light amount information table stored in the storage unit 432, the processing advances to step S342, and the control unit 431 selects (detects) the light amount information correlated with the user ID instructed by the instruction information as the light amount information of interest in the light amount information table.

Now, in the case that multiple pieces of light amount information exist that are correlated to the user ID instructed by the instruction information in the light amount information table, one piece of light amount information is selected, randomly for example, from the multiple pieces of light amount information thereof, as the light amount information of interest.

Upon the light amount information of interest being selected, the processing is advanced from step S342 to step S343, and the control unit 431 controls the light distributing unit of the necessary one or more other communication devices out of the other communication devices except the communication device 401, according to the light amount information of interested selected in step S342, whereby the communication unit 401 distributes the light collected by the light collecting unit of the one or more other communication devices from the light distributing units of the one or more other communication devices, so that the brightness of the illumination by the display unit 419 of the communication device 401 becomes the brightness instructed according to the operations performed in the past by the user of the guest room HA1.

With the communication device 401, the light receiving unit 417 receives the light collected by the light collecting unit of the other communication device instructed by the instruction information, such light being distributed from the light distributing unit of the one or more other communication devices as described above, and the display unit 419 illuminates the room interior of the guest room HA1 with that light. That is to say, the display unit 419 illuminates the room interior HA1 with the brightness instructed according to the operations performed in the past by the user of the guest room HA1.

Note that the processing in B of Fig. 25 is performed for all of the communication devices making up the collaborative processing system besides the communication device 401.

As described above, according to the processing described in A in Fig. 25, for example with the communication device 401 installed in the guest room HA1, upon the instructing unit 415 instructing the light that is collected by the light collecting unit of the other communication devices indirectly, according to the operations of the user of the guest room HA1, the light receiving unit 417 receives the light collected by the light collecting unit of the other communication devices that is instructed according to the instruction information corresponding to the instructions of the instructing unit 415, and the display unit 419 illuminates the room interior of the guest room HA1 with the light received by the light receiving unit 417.

Further, with the control unit 431, the user ID of the user of the guest room HA1 and the light amount information of the image displayed on the display unit 419 are correlated and registered in the light amount information table.

On the other hand, according to the processing described in B in Fig. 25, the control unit 431 uses the light amount information table to select light amount information (light amount information of interest) that is correlated to the user ID of the user of the guest room HA1, which is a particular user ID for example, which the instruction information instructs, that is transmitted from the communication device 401 to the control unit 431, and according to the light amount information of interest thereof, controls the provision of light by the light distributing unit of the necessary one or more other communication devices.

That is to say, the control unit 431 controls the light distributing unit of the necessary one or more other communication devices, and distributes the light collected by the light collecting unit of the one or more other communication devices to the communication device 401.

Subsequently, with the communication device 401, the light receiving unit 417 receives light from the light distributing unit of the necessary one or more other communication devices, and the display unit 419 illuminates the room interior of the guest room HA1 by the light thereof.

Accordingly, in the case that the user has previously lodged in one of the guest rooms in the hotels HA through HD, and for example has performed operations to adjust the brightness of the illumination to the brightness favored by the user, when the user lodges again in one of the guest rooms in the hotels HA through HD, the brightness of the illumination is adjusted to the brightness favored by the user, even without the user performing operations to adjust the brightness of the illumination.

As a result, this provides the user with a feeling that the hotel side where the user has previously lodged, of the hotels HA through HD, remembers the user, and makes provisions matching the user preferences.

Note that in Fig. 25, a case of using the light received by the light receiving unit 417 for illumination of the room interior of the guest room HA1 is described, but the processing in Fig. 25 can be applied to a case of using the light received by the light receiving unit 417 as a light source for displaying an image with the display unit 419 made up of the liquid crystal cells 151 and 152 (Fig. 6), i.e. as backlighting.

That is to say, the processing in Fig. 25 can also be applied to adjusting the brightness of the image displayed with the display unit 419.

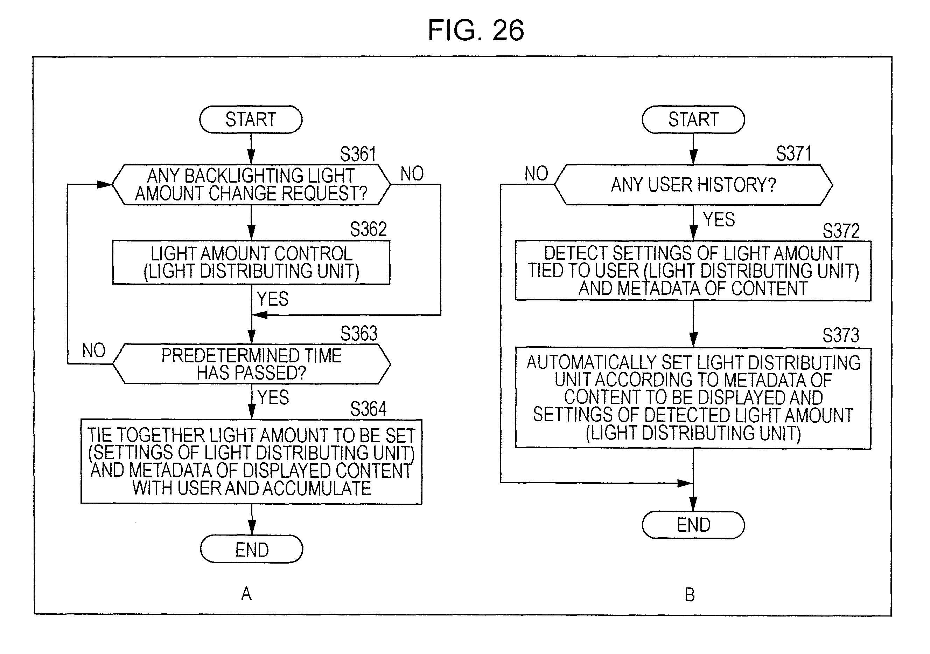

Next, processing performed relating to images and light with the collaborative processing system in Fig. 23 will be described with reference to Fig. 26.

A in Fig. 26 is a flowchart describing one of the processing that the control unit 431 in Fig. 23 performs relating to images and light.

For example, with the communication device 401, the light collecting unit 411 collects the sunlight, and emits the light obtained by such light collection to the light distributing unit 413.

Now, the light distributing unit 413 distributes (provides) the light from the light collecting unit 411 to the other communication devices such as the communication device 402 or the like, according to the control by the control unit 431.

Even with the other communication devices making up the collaborative processing system including the communication device 402, similar to the communication device 401, the sunlight is collected and the light obtained as a result thereof is distributed according to the control by the control unit 431.

For example, with the communication device 402 if the light distributing unit 423 is now distributing the light collected by the light collecting unit 421 to the communication device 401 under control of the control unit 431, with the communication device 401 the light receiving unit 417 receives the light distributed from the light distributing unit 423 of the communication device 402, and supplies this to the display unit 419.

If the user of the guest room HA1 performs operations to instruct images of a television broadcast program, images that the imaging units of the various communication devices making up the collaborative processing system are imaging, including the imaging unit 412 of the communication device 401 and the imaging unit 422 of the communication device 402, and displays of other image content, for example, the display unit 419 displays the images according to the instructions by the user of the guest room HA1 with the light from the light receiving unit 417 as backlighting.

On the other hand, in step S361 the control unit 431 determines whether or not there have been any instructions (request) for change to the brightness of the display of images by the display unit 419 of the communication device 401, i.e. the light amount of backlighting.

That is to say, in the case that the user of the guest room HA1 performs operations to change the brightness of the image display by the display unit 419 to a brighter brightness or a darker brightness than the currently brightness, with the communication device 401 the instructing unit 415 generates instruction information to instruct the light amount of the backlighting corresponding to the brightness after the change, according to the operations by the user of the guest room HA1, and the user ID of the user of the guest room HA1 and the metadata of the image displayed on the display unit 419 are included in the instruction information thereof and supplied to the transmission unit 416.

The transmission unit 416 transmits the instruction information from the instructing unit 415 to the control unit 431.

Now, as to the metadata of the images displayed on the display unit 419 that is included in the instruction information, for example information of a genre of a television broadcast program (e.g. a sports program, news program, and so forth) serving as the image thereof, or information of an object displayed in the image or the like can be used.

Also, the user ID of the user of the guest room HA1 is input in the instructing unit according to the operations of an employee of the hotel HA or operations of the user lodging in the guest room HA1, for example, and the metadata of the image may be included in the image signals of the images thereof, for example.

In step S361, as described above, determination is made as to whether or not instruction information to instruct the light amount of the backlighting has been transmitted from the transmission unit 416 to the control unit 431.

In the case determination is made in step S361 that the instruction information to instruct the light amount of the backlighting has not been transmitted, i.e. for example in the case that the user of the guest room HA1 desires to continue with the brightness of the image display by the display unit 419 as the current brightness, the processing skips step S362 and advances to step S363.

Also, in the case determination is made in step S361 that the instruction information to instruct the light amount of the backlighting has been transmitted from the transmission unit 416 to the control unit 431, the processing advances to step S362, the control unit 431 performs control to switch (change) the light amount of the backlighting for displaying the images with the display unit 419 of the communication device 401 from the currently light amount to the light amount instructed by the instruction information thereof, and the processing advances to step S363.

That is to say, in step S362, by the control unit 431 controlling the light distributing unit of the necessary one or more other communication devices of the other communication devices except the communication device 401, the light collected by the light collecting unit of the one or more other communication devices, from the like collecting unit of one or more other communication devices, is distributed to the communication device 401 so that the light amount of the backlighting for displaying images with the display unit 419 of the communication device 401 becomes the light amount instructed by the instruction information from (the transmission unit 416 of) the communication device 401.

Now, the instruction information that instructs the light amount of backlighting which is transmitted to the control unit 431 from the communication device 401 can be said to be indirectly instructing the light that is collected by the light collecting unit of the other communication devices for obtaining the light amount of the backlighting.

With the communication device 401, the light receiving unit 417 receives the light collected by the light collecting unit of the other communication devices instructed by the instruction information, such light being distributed from the light distributing unit of the other communication devices as described above, and the display unit 419 displays the image with the light thereof as backlighting. That is to say, the display unit 419 displays the images with the brightness corresponding to the light amount instructed by the instruction information.

In step S363 the control unit 431 determines whether or not a predetermined amount of time has passed from the start of the image display with the current light amount by the display unit 419 of the communication device 401.

In the case determination is made in step S363 that a predetermined amount of time has not passed from the start of the image display with the current light amount by the display unit 419, i.e. in the case there is a possibility for the user of the guest room HA1 to dislike the brightness of the current image display and perform operations to change the light amount of the backlighting when not much time has passed from the start of the image display at the current light amount by the display unit 419, the processing returns to step S361.

Also, in the case determination is made in step S363 that a predetermined amount of time has passed from the start of the image display with the current light amount by the display unit 419, i.e. in the case that the user of the guest room HA1 likes the brightness of the current image display, and continues to leave the light amount of the backlighting as is for a certain period of time, the processing advances to step S364, and the control unit 431 correlates (ties together) the user ID of the user of the guest room HA1, the light amount information relating to the light amount of backlighting changed according to the user operations thereof, and the metadata of the image displayed on the display unit 419, and stores (accumulates) this in the storage unit 432.

Now, as described above, upon the user of the guest room HA1 performing operations to change the light amount of the backlighting, the control unit 431 distributes the light collected by the light collecting unit of the one or more other communication devices to the communication device 401 from the light distributing unit of the one or more other communication devices other than the communication device 401, based on the instruction information to instruct the light amount of the backlighting, and with the communication device 401, the light thus distributed is received by the light receiving unit 417.

That is to say, the light receiving unit 417 receives the light collected by the light collecting unit of the one or more other communication devices indirectly instructed by the instruction information, according to the user operations to change the light amount of the backlighting.

In step S364, the control unit 431 stores a table wherein the user ID of the user of the guest room HA1, the light amount information relating to the light amount of the light received by the light receiving unit 417 according to the user operations, and the metadata of the image displayed on the display unit 419 using the light of the light amount thereof (as backlighting) are correlated, i.e. a table wherein the metadata of the image is further correlated to the user ID of the light amount information table described in Fig. 25 and the light amount information (hereafter also called backlighting table), is stored in the storage unit 432.

Now, the metadata of the image correlated with the user ID (and light amount information) and registered in the backlighting table is also called registration metadata.

Note that the backlighting light amount information instructed by the instruction information and information (settings) or the like of the light distributing unit controlled based on the instruction information for example, can be used as the light amount information.

Also, the processing in A in Fig. 26 is performed for all of the communication devices making up the collaborative processing system other than the communication device 401.

Next, B in Fig. 26 is a flowchart describing another processing that the control unit 431 in Fig. 23 performs relating to images and light.

The processing in B in Fig. 26 is performed using the backlighting table stored in the storage unit 432 in the processing in A in Fig. 26.

For example, if the user of the guest room HA1 performs operations to instruct the display of images of a television broadcast program, images that the imaging unit of the various communication devices making up the collaborative processing system are imaging, including the imaging unit 412 of the communication device 401 and the imaging unit 422 of the communication device 402, and other image contents for example, the images according to the instructions of the user of the guest room HA1 are displayed at the display unit 419 with the light from the light receiving unit 417 as backlighting.

Further, with the communication device 401, the instructing unit 415 generates the instruction information to instruct the user ID of the user and the metadata of the image displayed on the display unit 419, according to the operations of instruction of image content display by the user of the guest room HA1, and supplies this to the transmission unit 416.

The transmission unit 416 transmits the instruction information from the instructing unit 415 to the control unit 431, and the control unit 431 thus receives the instruction information to instruct the user ID and image metadata that is transmitted from the transmission unit 416.

Upon receiving the instruction information to instruct the user ID and image metadata, in step S371 the control unit 431 determines whether a history exists for the user of the user ID instructed by the instruction information, i.e. whether the user ID instructed by the instruction information is registered in the backlighting table stored in the storage unit 432.

In the case determination is made in step S371 that the user ID instructed by the instruction information is not registered in the backlighting table stored in the storage unit 432, i.e. for example in the case that the user of the user ID instructed by the instruction information is lodging in the community in Fig. 4 for the first time, the processing skips steps S372 and S373, and ends.

Also, in the case determination is made in step S371 that the user ID instructed by the instruction information is not registered in the backlighting table stored in the storage unit 432, the processing advances to step S372, and the control unit 431 selects (detects) from the backlighting table one or more sets of light amount information and registered metadata correlated with the user ID instructed by the instruction information as a set of interest, and the processing is advanced to step S373.

In step S373, the control unit 431 selects a set of interest to include registered metadata that matches the metadata of the image instructed by the instruction information from the one or more sets of interest, and selects (detects) the light amount information of the sets of interest as light amount information of interest.

Further, in step S373, after selecting the light amount information of interest, the control unit 431 controls the light distributing unit of the necessary one or more other communication devices out of the other communication devices excluding the communication device 401, according to the light amount information of interest that is selected in step S372, whereby the light collected by the light collecting unit of the one or more other communication devices is distributed from the light distributing units of the one or more other communication devices to the communication device 401, so that the light amount of the backlighting for displaying an image on the display unit 419 of the communication device 401 becomes the light amount instructed according to the operations performed in the past by the user of the guest room HA1.

With the communication device 401, the light receiving unit 417 receives the light collected by the light collecting unit of the other communication devices instructed by the instruction information which is thus distributed from the light distributing units of the one or more other communication devices, and the display unit 419 displays an image with the light thereof as backlighting. That is to say, with the display unit 419, the image having metadata that matches the metadata of the image thereof is displayed with a light amount instructed according to operations that the user of the guest room HA1 had performed when viewing the image in the past.

Note that the processing in B in Fig. 26 is performed for all of the communication devices making up the collaborative processing system besides the communication device 401.

As described above, according to the processing described in A in Fig. 26, for example, with the communication device 401 installed in the guest room HA1, the instructing unit 415 instructs the light collected by the light collecting unit of the other communication device indirectly, according to the operations of the user of the guest room HA1, the light receiving unit 417 receives the light collected by the light collecting unit of the other communication device that is instructed according to the instruction information corresponding to the instructions by the instructing unit 415, and the display unit 419 displays an image with the light received by the light receiving unit 417 as the backlighting.

Further, with the control unit 431, the user ID of the user of the guest room HA1, the metadata of the image displayed on the display unit 419 (registration metadata), and the light amount information relating to the light amount of the backlighting when the image thereof is displayed are correlated and registered in the backlighting table.

On the other hand, according to the processing described in B in Fig. 26, the control unit 431 uses the backlighting table to select one or more sets of registration metadata and light amount information which are correlated to a particular user ID, for example, the user ID of the user of the guest room HA1 instructed by the instruction information that is transmitted from the communication device 401 to the control unit 431, and detects the light amount information correlated to the registration metadata matching the image metadata instructed by the instruction information from the light amount information of the one or more sets, i.e. the metadata of the image displayed on the display unit 419 as the light amount information of interest.

Further, the control unit 431 controls the provision of light by the light distributing unit of the necessary one or more other communication devices, according to the light amount information of interest.

That is to say, the control unit 431 controls the light distribution unit of the necessary one or more other communication devices, and distributes the light collected by the light collecting unit of the one or more other communication devices to the communication device 401.

Subsequently, with the communication device 401, the light receiving unit 417 receives the light from the light distributing unit of the necessary one or more other communication devices, and the display unit 419 displays an image on the display unit 419 with that light as backlighting.

Accordingly, in the case that the user has previously lodged in one of the guest rooms of the hotels HA through HD, and for example has performed operations to adjust the light amount of the backlighting for displaying an image to be the light amount of the user preference, when the user lodges again in one of the guest rooms in the hotels HA through HD, the light amount of the backlighting is adjusted to the light amount favored by the user, even without the user performing operations to adjust the light amount of the backlighting.

Further, the adjustments of the light amount of the backlighting are performed for (the metadata of) each image displayed on the display unit 419.

As a result, this provides the user with a feeling that the hotel side where the user has previously lodged, of the hotels HA through HD, remembers the user, and makes provisions matching the user preferences.

Note that in Fig. 26, the light amount of the backlighting is controlled, but other controls may be made, for example the light amount of an illumination device independent from the display unit 419 in the guest room HA1 can be controlled instead of the light amount of the backlighting.

Next, (the daylighting unit not shown including) the display unit 419 of the communication device 401 making up the collaborative processing system in Fig. 23 can be provided on the ceiling as well as be provided on the wall face of the guest room HA1, as with (the daylighting unit 345 including) the display unit 315 in Fig. 16.

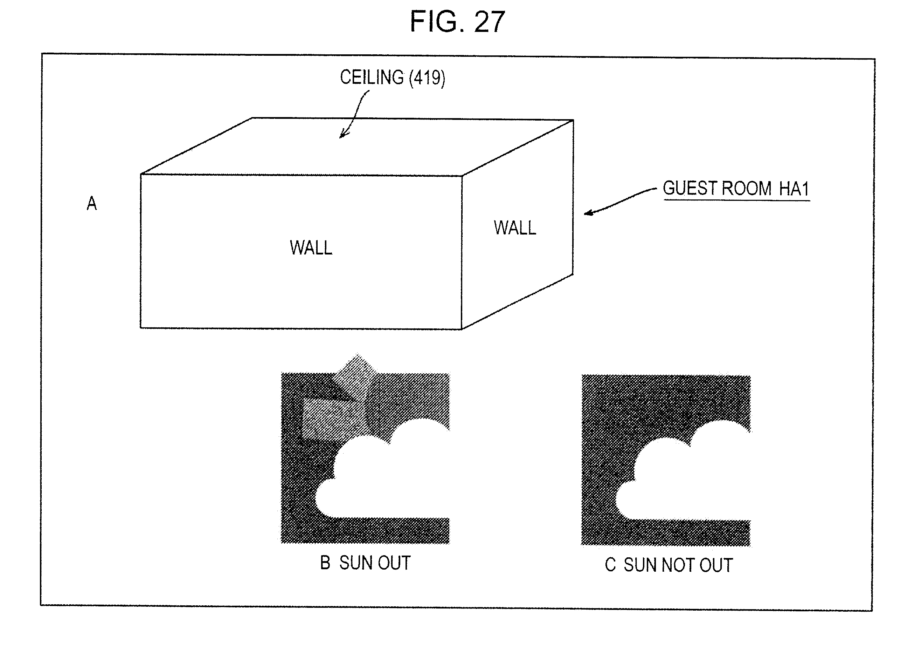

Fig. 27 shows a configuration example of a guest room HA1 wherein the communication device 401 is thus installed.

That is to say, A in Fig. 27 is a perspective view that schematically shows a configuration example of the guest room HA1 wherein the communication device 401 is installed, in the state wherein the display unit 419 is provided on the ceiling.

In A of Fig. 27, (an unshown daylighting unit including) the display unit 419 of the communication device 401 is provided on the ceiling with the display face that displays images facing the room interior side of the guest room HA1.

With the display unit 419 provided on the ceiling, for example, images of scenery of the sky and so forth that might have been seen if there was no ceiling of the guest room HA1 can be displayed.

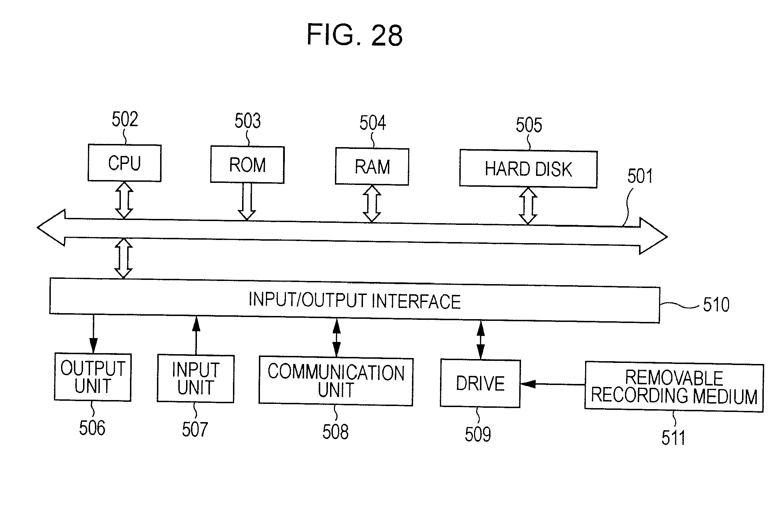

Also, for example, with the imaging unit of the communication device installed on the uppermost floor of the hotel HA, images of scenery of the sky in a state of the sun being visible, as shown in Fig. 28B, and images of scenery of the sky in a state of the sun being hidden behind clouds and not visible, as shown in Fig. 28C, and so forth, are imaged, and the display unit 419 can display the images of scenery of the sky in a state of the sun being visible or images of scenery of the sky in a state of the sun being hidden behind clouds and not visible, according to the user operations.

Thus, by displaying the images on (the display unit 419 provided on) the ceiling, the user can enjoy the sensation as if being on a roof balcony, for example.

Also, the users lodging in a guest room other than on the uppermost floor can enjoy the sensation as if lodging on the uppermost floor.

Further, for example, even in a case that the guest room HA1 is underground, the user can enjoy the sensation as if lodging in an above-ground guest room.

Next, the series of processing described above can be performed with hardware and also can be performed with software. In the case of performing the series of processing with software, a program making up the software is installed in a general-use computer or the like.

Fig. 28 shows a configuration example of an embodiment of a computer in which a program to execute the above-described series of processing is installed.

The program can be recorded beforehand in a hard disk 505 or ROM 503 serving as a recording medium built into the computer.

Alternatively, the program can be stored (recorded) temporarily or permanently in a removable recording medium 511 such as a flexible disk, CD-ROM (Compact Disc Read Only Memory), MO (Magneto Optical) disk, DVD (Digital Versatile Disc), magnetic disk, semiconductor memory, or the like. Such a removable recording medium 511 can be provided as so-called packaged software.

Note that besides the program being installed in the computer from a removable recording medium 511 such as described above, the program can be transferred wirelessly to the computer from a download site via satellite for digital satellite broadcasting, or transferred by cable to the computer via a network such as a LAN or the Internet, and the computer can receive the program thus transferred with a communication unit 508 and install in a built-in hard disk 505.

The computer has a built-in CPU (Central Processing Unit) 502. The CPU 502 is connected to an input/output interface 510 via a bus 501, and upon a command being input by a user operating an input unit 507 made up from a keyboard, mouse, microphone and so forth, via the input/output interface 510 or the like, accordingly the program stored in the ROM (Read Only Memory) 503 is executed. Alternatively, also, the CPU 502 loads to RAM (Random Access Memory) 504 and executes the program stored in the hard disk 505, the program transferred by satellite or network and received by the communication unit 508 and installed in the hard disk 505, or the program read out from the removable recording medium 511 mounted on a drive 509 and installed in the hard disk 505. Thus, the CPU 502 performs processing according to the above-described flowcharts or processing performed by the configuration of the block diagram described above. Also, the CPU 502 outputs the processing results as needed, for example, from an output unit 506 made up of an LCD (Liquid Crystal display) or speaker or the like via the input/output interface 510, or transmits from the communication unit 508, and further records in the hard disk 505 or the like.

Now, according to the present Specification, the processing steps described in the program causing the computer to perform various types of processing do not necessarily have to be processed in a time-series manner following the order described as flowcharts, and include processing executed in parallel or individually, (e.g. parallel processing or processing by object).

Also, the program may be that which is processed by one computer, or may be that which is divided and processed by multiple computers. Further, the program may be transferred from a remote computer and executed.

Note that the embodiments of the present invention are not limited to the above-described embodiments, and various modifications can be made without departing from the spirit and scope of the present invention.

That is to say, for example, in Fig. 24, the control unit 431 making up the control device 403 performs the processing in Fig. 24 for all of the communication devices making up the collaborative processing system, but the processing in Fig. 24 can be performed separately by each communication device making up the collaborative processing system while sharing the pointer table and user table (B in Fig. 24), for the communication device itself.

The processing in Fig. 25 and Fig. 26 and so forth are also the same.

## Claims

1. A communication device to perform communication comprising:
sensor means to sense a physical amount and output said physical amount for sending to another communication device;
instructing means to instruct the sensor output of the sensor means that the other communication device has;
transmission means to transmit the instruction information corresponding to the instructions of said instructing means; and
receiving means to receive the sensor output of the sensor means instructed according to said instruction information.

2. The communication device according to Claim 1, wherein
said sensor means are imaging means to image an image and output a first image signal;
said instructing means instruct a second image signal output by the imaging means of the other communication device;
said receiving means are reception means to receive said second image signal; and
the communication device further comprises:
display means to display an image corresponding to said second image signal.

3. The communication device according to Claim 2, wherein said instructing means instruct said second image signal which satisfies predetermined conditions.

4. The communication device according to Claim 3, wherein said predetermined condition is that said second image signal is an image signal of which imaging is performed at a predetermined time.

5. The communication device according to Claim 3, wherein said predetermined condition is that said second image signal is an image signal in which a predetermined object is included.

6. The communication device according to Claim 2, wherein said instructing means instruct said second image signal based on instructions performed in the past.

7. The communication device according to Claim 2, wherein said imaging means are installed at the roughly back face of said display means.

8. The communication device according to Claim 2, wherein said display means display an image on a wall face.

9. The communication device according to Claim 2, wherein the imaging means of said other communication device is installed at the roughly back face of the display means of said other communication device.

10. The communication device according to Claim 2,
wherein the imaging means of said other communication device is installed at a position at a different height as the position that said imaging means of said communication device is installed.

11. The communication device according to Claim 2,
wherein the imaging means of said other communication device is installed on a building that is a different building from which said imaging means of said communication device is installed.

12. The communication device according to Claim 2,
wherein the imaging means of said other communication device is installed facing a direction that differs from the direction that said imaging means of said communication device is facing.

13. The communication device according to Claim 1,
wherein said sensor means are light collecting means to collect sunlight; and
said receiving means are light receiving means to receive the light collected by the light collecting means of said other communication device instructed according to said instructing information.

14. The communication device according to Claim 13,
wherein said instructing means further instructs a device that uses light;
in the case that the light amount necessary for the device instructed according to the instruction information corresponding to the instructions of said instructing means is insufficient with the light amount of light collected by the light collecting means of said communication device, said light receiving means receive the light collected by the light collecting means of said other communication device which is provided according to the control by the control means which controls the provision of light collected by the light collecting means of said other communication device.

15. The communication device according to Claim 14,
wherein the light received by said light receiving means is used as light to illuminate liquid crystal.

16. The communication device according to Claim 13,
wherein said instructing means further instructs the brightness;
and wherein, in the case that the light amount necessary for the brightness instructed according to the instruction information corresponding to the instructions of said instructing means is insufficient as the light amount of light collected by the light collecting means of said communication device, said light receiving means receive the light collected by the light collecting means of said other communication device that is provided according to the control by the control means to control the provision of light collected by the light collecting means of said other communication device.

17. The communication device according to Claim 13 further comprising:
light amount detecting means to detect the light amount of the light collected by said light collecting means, wherein
said instructing means further instructs that the light amount detected by said light amount detecting means is less than a predetermined threshold; and wherein
said transmission means transmits the instruction information corresponding to the instruction of said instructing means.

18. The communication device according to Claim 13, further comprising:
light distributing means to perform light distribution to provide light, wherein
said transmission means transmits said instruction information to the control means to control the light provision according to said instruction information; and wherein
said light distributing means distributes the light collected by said light collecting means to the light receiving means of said other communication device, according to control by said control means.

19. The communication device according to Claim 13, further comprising:
light distributing means to perform light distribution to provide light, wherein
said light distributing means distributes the light collected by said light collecting means to said light receiving means, according to instructions by said instructing means.

20. The communication device according to Claim 1, further comprising:
display means to display images, wherein in the case that
said sensor means are imaging means to image an image and output the image signal,
said receiving means are reception means to receive the image signals,
said instructing means instruct the image signals output by the imaging means of the other communication device according to user operations,
said reception means receive the image signals output by the imaging means of said other communication device instructed according to the instruction information corresponding to the instructions of said instructing means,
said display means display an image corresponding to the image signals received by said reception means;
said reception means further receive the image signals provided according to control of the control means to control the provision of the image signal; and
said control means use
a pointer table that correlates metadata of an image and a pointer for accessing the image signal output by the imaging means to image the image thereof, and
a user table that correlates a user ID to identify said user and metadata of the image displayed on said display means according to the user operations;
to select the imaging means to image the images having the metadata correlated to the identified user ID; and control the provision of image signals output by the imaging means thereof.

21. The communication device according to Claim 1,
wherein in the case that
said sensor means are light collecting means to collect sunlight,
said receiving means are light receiving means to receive the light,
said instructing means instruct the light collected by the light collecting means of the other communication device according to the user operations, and
said light receiving means receive the light collected by the light collecting means of the other communication device instructed according to the instruction information corresponding to the instruction of said instructing means,
the communication device further comprises:
light distributing means to perform light distribution that provides the light collected by said light collecting means; wherein
said light receiving means further receive the light provided according to the control by the control means that controls the provision of light, and
said control means use a table correlating a user ID identifying said user and light amount information relating to the light amount received by said light receiving means according to the operation of the user thereof, to detect the light amount information correlated to the identified user ID, whereby according to the light amount information thereof, controls the provision of light by the light distributing means of the other communication device to said light receiving means.

22. The communication device according to Claim 21,
wherein the light received by said light receiving means is used as a light source for displaying an image.

23. The communication device according to Claim 22, further comprising:
display means to display an image, wherein
in said table are correlated said user ID and light amount information, and also correlated are said light amount information and metadata of the image displayed using the light of the light amount corresponding to the light amount information; and wherein
said control means use said table to detect the light amount information correlated to the metadata of the image displayed with said display means, out of the light amount information correlated to said identified user ID, and according to the light amount information thereof, controls the provision of light to said light receiving means by the light distributing means of the other communication device.

24. The communication device according to Claim 22,
wherein said image is displayed on the ceiling.

25. A communication method for a communication device to perform communications, wherein
said communication device comprises:
sensing means to sense a physical amount and output for sending said physical amount to another communication device; including the steps of
sensing the physical amount and outputting to send said physical amount to another communication device,
instructing the sensor output of the sensor means which the other communication device has,
transmitting instruction information corresponding to said instructing, and
receiving the sensor output of the sensor means instructing according to said instruction information.

26. A program to cause a computer to function as a communication device to perform communications, wherein
said communication device comprises:
sensing means to sense a physical amount and output for sending said physical amount to another communication device; further as
instructing means to instruct the sensor output of the sensor means which the other communication device has;
transmission means to transmit the instruction information corresponding to the instruction of said instruction means; and
receiving means to receive the sensor output of the sensor means instructed according to said instruction information.
